(19) **Europäisches Patentamt / European Patent Office / Office européen des brevets**

(11) **EP 2 056 288 A1**

(12) **EUROPEAN PATENT APPLICATION**
published in accordance with Art. 153(4) EPC

(43) Date of publication:
06.05.2009 Bulletin 2009/19

(21) Application number: 07767738.3

(22) Date of filing: 27.06.2007

(51) Int Cl.:
*G09G 5/00* (2006.01)

(86) International application number:
PCT/JP2007/062940

(87) International publication number:
WO 2008/015858 (07.02.2008 Gazette 2008/06)

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(30) Priority: 31.07.2006 JP 2006208572

(71) Applicant: Sharp Kabushiki Kaisha
Osaka-shi, Osaka 545-8522 (JP)

(72) Inventors:
• KINOSHITA, Takuya
1-2-15-111, Saiwai-cho
Chiba 261- 0001 (JP)
• SUDO, Tatsuo
Chiba-shi, Chiba 261- 0013 (JP)

• TAKAHASHI, Masafumi
Sakura-shi, Chiba 285- 0811 (JP)
• NITTA, Soichi
Narashino-shi, Chiba 275- 0016 (JP)
• HIRATA, Masafumi
Edogawa-ku
Tokyo 133- 0052 (JP)
• ENATSU, Aya
Chiba-shi, Chiba 262- 0033 (JP)
• UMEMOTO, Azusa
Kizugawa-shi, Kyoto 619- 0202 (JP)
• KASHITO, Kiyotaka
Kobe-shi, Hyogo 658- 0081 (JP)

(74) Representative: Müller - Hoffmann & Partner
Patentanwälte
Innere Wiener Strasse 17
81667 München (DE)

(54) **CONTENTS REPRODUCING DEVICE, CONTENTS REPRODUCING METHOD, CONTENTS REPRODUCING SYSTEM, CONTENTS DATA TRANSMITTING DEVICE, CONTENTS DATA TRANSMITTING METHOD, PROGRAM, AND RECORDING MEDIUM**

(57) A control section (110) of a content reproduction apparatus realized as a slide show display apparatus (100) includes content reproduction means which is realized as a display screen generating section (113) which generates, until reproduction of a slide show becomes ready to start, a title slide display screen based on a title slide display screen generation script (second set of content data) which has been stored in the apparatus at the time, among slide show data. It is therefore possible to show a title of the slide show to the user, when the start of the reproduction of the slide show is delayed. This makes it possible to realize a content reproduction apparatus which shows information corresponding to a content to be reproduced, when the start of reproduction of the content is delayed, so that the user does not feel stress in using the apparatus.

FIG. 1

**Description**

Technical Field

The present invention relates to a content reproduction apparatus, a content reproduction method, and a content reproduction system, for reproducing content data. The present invention also relates to a content data sending apparatus and a content data sending method, by which content data is transmitted to the content reproduction apparatus. The present invention also relates to a program for causing a computer to operate as these apparatuses, and a storage medium storing the program.

Background Art

Content reproduction apparatuses which reproduction contents such as still images and moving images have commonly been used. In particular, along with the popularization of the Internet and Web services using the same, there have been network-type content reproduction apparatuses which acquire content data from an external server apparatus over a network and reproduction the acquired content data. An example of such content reproduction apparatuses is an image display apparatus which acquires data of one or more photos from a server apparatus and reproduces the photos as a slide show.

In such a network-type content reproduction apparatus, a certain period of time is required to acquire content data. For this reason, when the user instructs to reproduction content, the reproduction of the content does not start immediately after the instruction to start the reproduction. In case where content data is generated by compressing or encoding content, a period of time for decompressing or decoding the content data is also required. Therefore, in this case, a delay from the supply of an instruction to start reproduction to the start of actual reproduction of a content is further elongated. For example, to perform a slide show with one or more high-quality photos (high-definition JPEG data) acquired from a server apparatus, a delay of several seconds to several tens of seconds may occur from the supply of an instruction to start reproduction to the start of the slide show, in consideration of typical speed of the network and JPEG decoding function.

Therefore, in a case of a network-type content reproduction apparatus, the user is forced to wait the start of actual reproduction of a content, without any compensation.

A similar problem also occurs in a case of a content reproduction apparatus which reads out content data stored in a hard disc drive or the like in the apparatus and reproduces a content. This is because a certain period of time is required to read out content data from a hard disc drive or the like. Also in this case, compressed or encoded content data further requires time to decompress or decode the data.

Patent Literature 1 teaches an information presentation system to solve the problem above. A user terminal device recited in the Patent Literature 1 monitors whether waiting time is required when content data specified by the user is acquired from the network, and displays on a monitor an advertisement stored in an advertisement data storage section, if the waiting time is required. Since advertisement is shown in place of content during a waiting period, it is possible to ease stress of the user.

Citation List

Patent Literature 1
Japanese Patent Application Publication, Tokukaihei, No. 10-254966 A (Publication Date: September 25, 1998)

Summary of Invention

According to the technology taught by the Patent Literature 1, an advertisement is displayed on a monitor in place of content which is supposed to be displayed, when the start of reproduction of the content is delayed. It is therefore possible to solve the problem that the user is forced to wait the start of reproduction of content without any compensation. However, presented to the user when a delay occurs is an advertisement which is nothing to do with the content which is supposed to be displayed. In other words, according to the conventional technology, the user receives information which is nothing to do with the content which is supposed to be reproduced, until reproduction of the content starts. Therefore, while the user receives compensation for a delay, he/she feels another kind of stress because information unrelated to the desired content is imposed thereto.

A delay may be eliminated by, for example, content to be reproduced is acquired or decompressed before the user gives an instruction to start reproduction. However, to perform such a process, it is necessary to provide in a content reproduction apparatus a storage device corresponding to the data size of acquired or decompressed content, to store the content. As the data size of content data increases, costs of the content reproduction apparatus also increase.

The present invention was done to solve the problem above, and the objective of the present invention is to achieve a content reproduction apparatus which shows information corresponding to a content to be reproduced, when the start of reproduction of the content is delayed, so that the user does not feel stress in using the apparatus.

To achieve the objective above, a content reproduction apparatus of the present invention, which serially reproduces contents based on sets of content data belonging to a content data group and serially displays, on a display section, the contents thus reproduced, includes content reproduction means for reproducing a content based on a second set of content data which belongs to the content data group, which has been stored in the content reproduction apparatus, and which is used for displaying, on the display section, information in regard to the content data group, the content reproduction means reproducing the content based on the second set of content data until reproduction of a content based on a first set of content data belonging to the content data group becomes ready to start.

To achieve the objective above, a content reproduction method of the present invention, for serially reproducing, by a content reproduction apparatus, contents based on sets of content data belonging to a content data group, includes the step of reproducing a content based on a second set of content data which belongs to the content data group, which has been stored in the content reproduction apparatus, and which is used for displaying, on a display section, information in regard to the content data group, the content being reproduced based on the second set of content data until reproduction of a content based on a first set of content data belonging to the content data group becomes ready to start.

According to the arrangement above, until the reproduction of a content based on the first set of content data becomes ready to start, a content is reproduced based on the second set of content data which has already been stored in the apparatus, among sets of content data belonging to the content data group. It is therefore possible to avoid a disadvantage that the user is forced to wait when the start of the reproduction of the content based on the first set of content data is delayed.

In addition to this, the second set of content data which is referred to in place of the first set of content data is content data for displaying, on the display section, information in regard to the content data group. On this account, according to the arrangements above, it is possible to provide to the user information in regard to the content data group including the first set of content data, when the start of reproduction of the content based on the first set of content data is delayed. It is therefore possible to avoid a problem that, while the user receives compensation for a delay, he/she feels another kind of stress because information unrelated to the desired content, such as an advertisement, is imposed thereto.

The content reproduction apparatus may obtain the content data group from outside and reproduces contents based on the same, or may read out the content data group which has been stored in advance in content data storage means (e.g. a hard disc drive) in the apparatus and reproduce contents based on the same.

In case where the content reproduction apparatus obtains the content data group from outside and reproduces the same, a state in which the reproduction of the first set of content data can start is, for example, a state in which acquisition of all of the first set of content data has been completed or a state in which acquisition of a part of the first set of content data, which part is required to start the reproduction of the content, has been completed. In case where the first set of content data is compressed or encoded, an example of the aforesaid state is a state in which all of the first set of content data has been decompressed or decoded or a state in which a part of the first set of content data, which part is required to start the reproduction of the content, has been decompressed or decoded.

In case where the content reproduction apparatus reads out the content data group from the content storage means, an example of a state in which the reproduction of the content based on the first set of content data can start is a state where all of the first set of content data has been read out from the content data storage means or a state where a part of the first set of content data, which part is required to start the reproduction of the content, has been read out from the content data storage means. In case where the first set of content data is compressed or encoded, an example of the aforesaid state is a state in which all of the first set of content data has been decompressed or decoded or a state in which a part of the first set of content data, which part is required to start the reproduction of the content, has been decompressed or decoded.

The display section may be included in the content reproduction apparatus or may be a member independent of the content reproduction apparatus. For example, the technical scope of the present invention includes a television receiver which includes a display panel as the display section and a desktop computer which adopts an external display as the display section.

Preferably, the content reproduction apparatus of the present invention acquires the content data group from outside and performs serial reproduction, and the content reproduction apparatus further includes content data acquisition means for acquiring the second set of content data from outside, prior to the first set of content data.

According to the arrangement above, in case where the content reproduction apparatus acquires the content data group from outside and reproduces the same, acquisition of the second set of content data is completed before acquisition of the first set of content data is completed and reproduction thereof becomes ready to start, and reproduction of the second set of content data can start. On this account, even if it is necessary to acquire the content data group from outside, information regarding the content group is shown to the user when the start of reproduction of the first set of content data is delayed.

Preferably, the content reproduction apparatus of the present invention further includes reproduction preparation time estimation means for estimating a reproduction preparation time required until the reproduction of the content based on the first set of content data becomes ready to start, and the content reproduction means reproduces the content based on the second set of content data until reproduction of the content based on the first set of content data becomes ready to start, when the reproduction preparation time is not shorter than a predetermined threshold.

The longer the reproduction preparation time required until reproduction of the content becomes ready to start is, the more the user feels stress.

In connection with this, according to the arrangement above, a reproduction start preparation time required until reproduction of the first set of content data becomes ready to start is estimated, and the second set of content data is reproduced when the reproduction preparation time is longer than a predetermined threshold. That is to say, in case where it is estimated that the reproduction start preparation time is long, information in regard to the content data group is shown to the user in place of reproduction of the first set of content data. This makes it possible to prevent the user from feeling undue stress.

According to the arrangement above, furthermore, it is possible to avoid a problem such that, since a time period of showing information in regard to the content data group is too short, the user cannot recognize what is indicated by the information, and hence the user is confused by the reproduction of the second set of content data in place of the first set of content data.

The content reproduction apparatus of the present invention is preferably arranged such that the second set of content data is content data for displaying, on the display section, a display screen including a title of the content data group.

According to this arrangement, as the information in regard to the content data group, the title of the content data group is shown to the user, prior to the reproduction of said another type of content data.

The content reproduction apparatus of the present invention is preferably arranged such that the second set of content data is content data for displaying, on the display section, a display screen including an explanation of operations that the user can execute while the content data group is reproduced.

According to this arrangement, as the information in regard to the content data group, an explanation on operations that the user can execute while the content data group is being reproduced is shown to the user, prior to the reproduction of said another type of content data.

To achieve the objective above, a content reproduction apparatus of the present invention, which reproduces a content based on content data so as to display, on a display section, the content thus reproduced, includes display control means for displaying, on the display section, a display screen including meta-information in regard to the content data, until reproduction of the content based on the content data becomes ready to start.

According to the arrangement above, until it becomes possible to start reproduction of the content, meta-information is displayed on the display section, in place of the content to be reproduced. Therefore, it is possible to solve a problem that the user is forced to wait when the start of reproduction of the content is delayed, and hence stress of the user is reduced.

Furthermore, according to the arrangement above, what is displayed in place of the content is meta-information included in the content data. Since the meta-information is information in regard to the content, meta-information corresponding to the content to be reproduced is shown to the user, prior to the start of reproduction of the content. Furthermore, it is possible to avoid a problem such that information such as an advertisement, which is unrelated to the content to be reproduced, is shown to the user thereby causing the user to feel another type of stress.

The content reproduction apparatus may obtain the content data from outside and reproduces the content based on the same, or may read out the content data from content data storage means (e.g. a hard disc drive) of the apparatus and reproduce the content based on the same.

In case where the content reproduction apparatus acquires the content data from outside, an example of a state where reproduction of the content can start is a state in which acquisition of all of the content data has been completed or a state in which acquisition of a part of the content data, which part is required to start the reproduction of the content, has been completed. In case where the content data is compressed or encoded, an example of the aforesaid state is a state in which all of the content data has been decompressed or decoded or a state in which a part of the content data, which part is required to start the reproduction of the content, has been decompressed or decoded.

In case where the content reproduction apparatus reads out the content data from the content storage means, an example of a state in which the reproduction of the content can start is a state where all of the content data has been read out from the content data storage means or a state where a part of the content data, which part is required to start the reproduction of the content, has been read out from the content data storage means. In case where the content data is compressed or encoded, an example of the aforesaid state is a state in which all of the content data has been decompressed or decoded or a state in which a part of the content data, which part is required to start the reproduction of the content, has been decompressed or decoded.

The content reproduction apparatus may be configured, for example, as a slide show display apparatus which acquires, as content data, image data of a group of plural images, and performs a slide show of the images in the group by serially switching the images to be displayed on the display section.

In this case, examples of a state where the reproduction of the content can start are a state where acquisition of all image data in the group has been completed and a state where, among the group of image data, acquisition of image data of an image to be displayed first is completed. In case where acquired image data is a compressed or encoded image, a state where decompression or decoding of acquired image data is another example of the aforesaid state.

In case where the content data includes at least a single set of JPEG data, EXIF information of the JPEG data included in the content data may be used as the aforesaid meta-information.

The display section may be included in the content reproduction apparatus or may be a member independent of the content reproduction apparatus. For example, the technical scope of the present invention includes a television receiver which includes a display panel as the display section and a desktop computer which adopts an external display as the display section.

Preferably, the content reproduction apparatus of the present invention acquires the content data from outside and reproduces a content based on the content data, and the content reproduction apparatus further includes meta-information acquisition means for acquiring the meta-information included in the external content data, independently of a process to acquire the content data.

Since the meta-information is included in the content data, the data size of the meta-information is likely to be smaller than the data size of the entire content data. On this account, a time period required to acquire the meta-information is likely to be shorter than a time required to acquire the entire content data.

According to the arrangement above, the meta-information is acquired independently of the content data. On this account, the meta-information acquisition means is highly likely to complete the acquisition of the meta-information, before the completion of the acquisition of the content data. On this account, when the start of the reproduction of the content is delayed, meta-information is easily displayed until the reproduction of the content becomes ready to start.

Preferably, the content reproduction apparatus of the present invention further includes area specifying information acquisition means for acquiring, from outside, area specifying information which specifies in which area of the content data the meta-information is stored, and the meta-information acquisition means acquires the meta-information in such a manner that only the area specified by the area specifying information is acquired among the external content data.

According to the arrangement above, since the meta-information is acquired independently of the content data, acquisition of the meta-information is highly likely to be completed before the completion of the acquisition of the content data.

Furthermore, according to the arrangement above, the content reproduction apparatus selectively acquires meta-information from the content data, based on the area specifying information. On this account, the server side from which the content data and meta-information are sent is not required to extract meta-information from the content data in advance.

The meta-information acquisition means is, for example, arranged as follows: the meta-information acquisition means sends, to the server side, an HTTP GET method request in which a Range header includes the area specifying information, and acquires the meta-information in response to the request. In this case, as a device on the server side, which sends the content data to the content reproduction apparatus, it is possible to adopt a general-purpose web server which can handle an HTTP GET method request including a Range header.

Preferably, the content reproduction apparatus of the present invention acquires the content data from outside and reproduces the content data, and the content reproduction apparatus further comprising meta-information extraction means for extracting the meta-information from the content data being acquired.

In case where, in the content data, meta-information is stored in an area prior to an indispensable part which is required to be completely acquired to start the reproduction of the content, the content extraction means can complete the extraction of the meta-information before the completion of the acquisition of the indispensable part.

Therefore, according to the arrangement above, the meta-information can be displayed in place of the reproduction of the content, until it becomes ready to start the reproduction of the content. In particular, in case where the meta-information is provided at the head of the content data, it is possible to start the display of the meta-information immediately after a time point at which the reproduction of the content should have been started.

Preferably, the content reproduction apparatus of the present invention further includes reproduction preparation time estimation means for estimating a reproduction preparation time required until the reproduction of a content based on the content becomes ready to start, and if the reproduction preparation time is not shorter than a predetermined threshold, the display control section causes the display section to display a display screen including the meta-information until the reproduction of the content based on the content becomes ready to start.

The longer the reproduction preparation time required until reproduction of the content becomes ready to start is, the more the user feels stress.

In this regard, according to the arrangement above, meta-information is displayed when the reproduction preparation time is not shorter than a predetermined threshold. It is therefore possible to prevent the user from feeling undue stress. Furthermore, it is possible to avoid a problem that, since a time period of showing the meta-information is too short, the user cannot recognize what is indicated by the meta-information, and hence the user is confused by the showing of the meta-information in place of the content.

To achieve the objective above, a content data sending apparatus of the present invention, which sends a content data group to a content reproduction apparatus, includes content data sending means for sending content data for displaying information in regard to the content data group, prior to another type of content data.

To achieve the objective above, a content data sending method of the present invention, for sending a content data group to a content reproduction apparatus, includes the step of sending content data for displaying information in regard to the content data group, prior to another type of content data in the content data group.

According to the arrangements above, the content data for displaying information in regard to the content data group is sent to the content reproduction apparatus, prior to other types of content data. On this account, the content reproduction apparatus can complete the acquisition of the content data for displaying information in regard to the content data group, before the completion of the acquisition of the other types of content data. Therefore, the content reproduction apparatus can reproduce content data which has been acquired and can display information in regard to the content data group, before the acquisition of the other types of content data is completed and reproduction of the other types of content data becomes ready to start. In other words, according to the arrangement above, in the content reproduction apparatus, information in regard to the content data group can be displayed until it becomes ready to start the reproduction of the other types of content data.

To achieve the objective above, a content data sending apparatus of the present invention, which sends content data to a content reproduction apparatus, includes meta-information sending means for sending, to the content reproduction apparatus, meta-information which is included in and in regard to the content data, the meta-information being sent independently of the content data.

According to this arrangement, the content data sending apparatus sends the meta-information included in the content data, independently of the content data. On this account, the content reproduction apparatus on the terminal side can complete the acquisition of the meta-information, before the completion of the acquisition of the content data. Therefore, in the content reproduction apparatus on the terminal side, meta-information can be displayed in place of the reproduction of the content, after the completion of the acquisition of the meta-information and before the completion of the acquisition of the content data.

Preferably, the content data sending apparatus further includes meta-information extraction means for extracting the meta-information from the content data, and the content data sending means sends, to the content reproduction apparatus, the meta-information extracted by the meta-information extraction means.

According to the arrangement above, since the content data sending apparatus sends meta-information extracted from the content data, the content reproduction apparatus on the terminal side is not required to extract meta-information from the content data. Therefore, the arrangement above allows the content reproduction apparatus on the terminal side to promptly start the display of the meta-information.

Preferably, the content data sending apparatus of the present invention further includes area specifying information sending means for sending, to the content reproduction apparatus, area specifying information which specifies in which area of the content data the meta-information is stored.

According to the arrangement above, the content reproduction apparatus on the terminal side, which receives area specifying information supplied from the content data sending apparatus, can selectively acquire only meta-information in content data, with reference to the supplied area specifying information. The content data sending apparatus is therefore not required to extract meta-information from content data in advance.

For example, the content reproduction apparatus on the terminal side may be arranged to send, to the content data sending apparatus, an HTTP GET method request in which the area specifying information is included in a Range header. In this case, the meta-information sending means of the content data sending apparatus may be realized as a general-purpose web server which can handle an HTTP GET method request including a Range header.

A content reproduction system of the present invention includes: a content data sending apparatus which sends a content data group; and a content reproduction apparatus which serially reproduces contents based on sets of content data belonging to the content data group supplied from the content data sending apparatus and serially displays, on a display section, the contents thus reproduced, the content reproduction apparatus including content reproduction means for reproducing a content based on a second set of content data which belongs to the content data group, which has been stored in the content reproduction apparatus, and which is used for displaying, on the display section, information in regard to the content data group, the content reproduction means reproducing the content based on the second set of content data until reproduction of a content based on a first set of content data belonging to the content data group becomes ready to start.

According to this arrangement, in the content reproduction apparatus, reproduction of the content is carried out based on the second set of content data which has been stored in the apparatus among sets of content data belonging to the content data group, until it becomes possible to start reproduction of the content based on the first set of content data. This makes it possible to solve a problem that the user is forced to wait when the start of the reproduction of the content based on the first set of content data is delayed.

Moreover, in the content reproduction apparatus, the second set of content data which is referred to in place of the first set of content data is content data for displaying, on the display section, information in regard to the content data group. Therefore, according to the arrangement above, information in regard to the content data group in which the first set of content data is included can be shown to the user, when the start of reproduction of the first set of content data is delayed. This makes it possible to avoid a problem that such that information such as an advertisement, which is unrelated to the content to be reproduced, is shown to the user thereby causing the user to feel another type of stress.

To achieve the objective above, a content reproduction system of the present invention includes: a content data sending apparatus which sends a content data group; and a content reproduction apparatus which serially reproduces contents based on content data belonging to the content data group supplied from the content data sending apparatus and serially displays, on a display section, the contents thus reproduced, the content reproduction apparatus including display control means for displaying, on the display section, a display screen including meta-information in regard to the content data, until reproduction of the contents based on the content data becomes ready to start.

According to the arrangement above, in the content reproduction apparatus, meta-information is displayed on the display section until it becomes possible to start reproduction of the contents. This makes it possible to solve a problem that the user is forced to wait when the start of the reproduction of the contents is delayed, and stress of the user is reduced.

Furthermore, according to the arrangement above, what is displayed in place of the content is meta-information included in the content data. Since the meta-information is information in regard to the content, meta-information corresponding to the content to be reproduced is shown to the user, prior to the start of reproduction of the content. Furthermore, it is possible to avoid a problem such that information such as an advertisement, which is unrelated to the content to be reproduced, is shown to the user thereby causing the user to feel another type of stress.

A content reproduction method, for reproducing a content based on content data and displaying, on a display section, the content thus reproduced, includes the step of displaying, on the display section, a display screen including meta-information in regard to the content data, until reproduction of the content based on the content data becomes ready to start.

According to the arrangement above, until it becomes possible to start reproduction of the content, meta-information is displayed on the display section, in place of the content to be reproduced. Therefore, it is possible to solve a problem that the user of the content reproduction apparatus is forced to wait when the start of reproduction of the content is delayed, and hence stress of the user is reduced.

Furthermore, according to the arrangement above, what is displayed in place of the content is meta-information included in the content data. Since the meta-information is information in regard to the content, meta-information corresponding to the content to be reproduced is shown to the user, prior to the start of reproduction of the content. Furthermore, it is possible to avoid a problem such that information such as an advertisement, which is unrelated to the content to be reproduced, is shown to the user thereby causing the user to feel another type of stress.

To achieve the objective above, a content data sending method of the present invention, for sending a content data group to a content reproduction apparatus, includes the step of sending, to the content reproduction apparatus, meta-information which is included in the content data and in regard to the content data, the meta-information being sent independently of the content data.

According to this arrangement, the content data sending apparatus sends the meta-information included in the content data, independently of the content data. On this account, the content reproduction apparatus on the terminal side can complete the acquisition of the meta-information, before the completion of the acquisition of the content data. Therefore, in the content reproduction apparatus on the terminal side, meta-information can be displayed in place of the reproduction of the content, after the completion of the acquisition of the meta-information and before the completion of the acquisition of the content data.

The content reproduction apparatus may be realized by using a computer. In such a case, the computer is caused to function as the aforesaid means, so that the scope of the present invention encompasses a program which realizes the content reproduction apparatus by using the computer and a computer-readable storage medium which stores the program.

The content data sending apparatus may be realized by using a computer. In such a case, the computer is caused to function as the aforesaid means, so that the scope of the present invention encompasses a program which realizes the content data sending apparatus by using the computer and a computer-readable storage medium which stores the program.

Additional objects, features, and strengths of the present invention will be made clear by the description below.

Further, the advantages of the present invention will be evident from the following explanation in reference to the drawings.

Brief Description of Drawings

Fig. 1

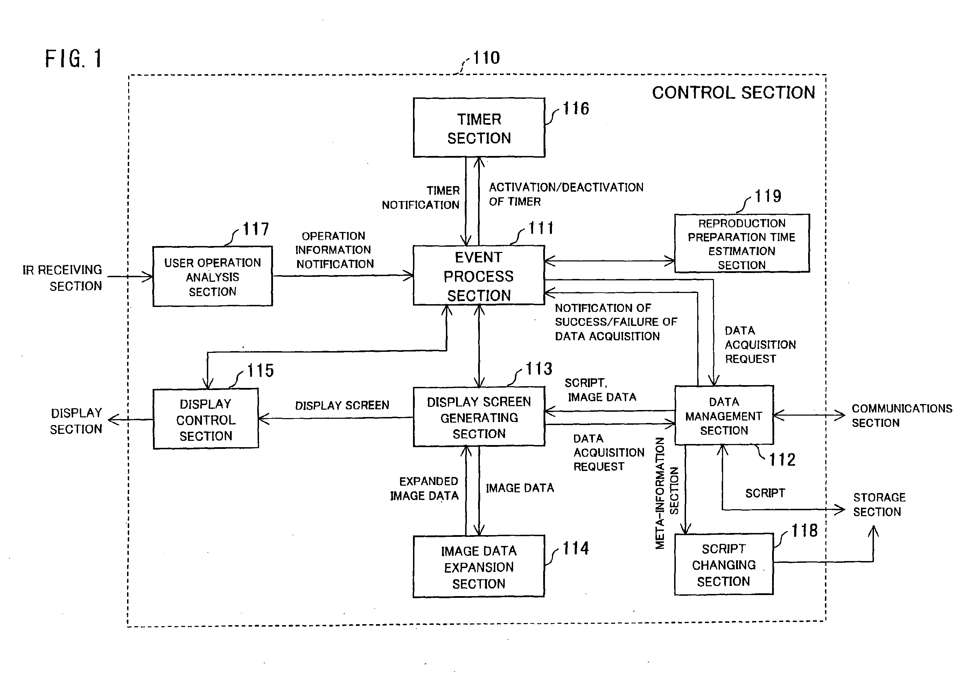

Fig. 1 relates to an embodiment of the present invention and is a functional block diagram showing a control device of a slide show display apparatus.
Fig. 2

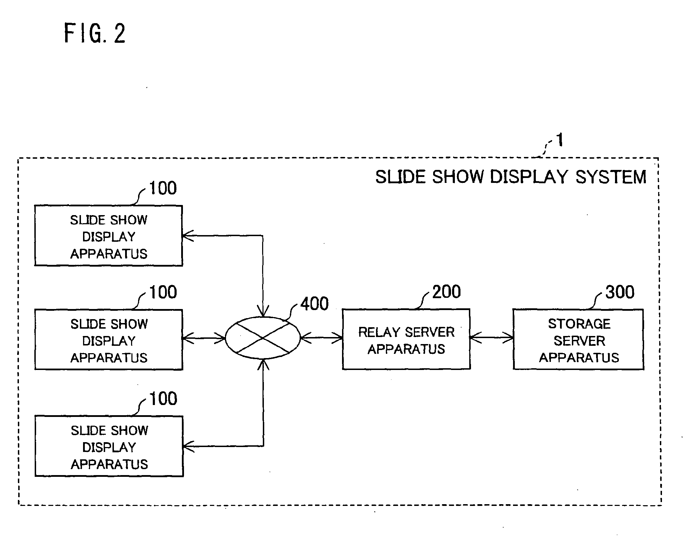

Fig. 2 relates to the embodiment of the present invention and outlines a slide show reproduction system.
Fig. 3

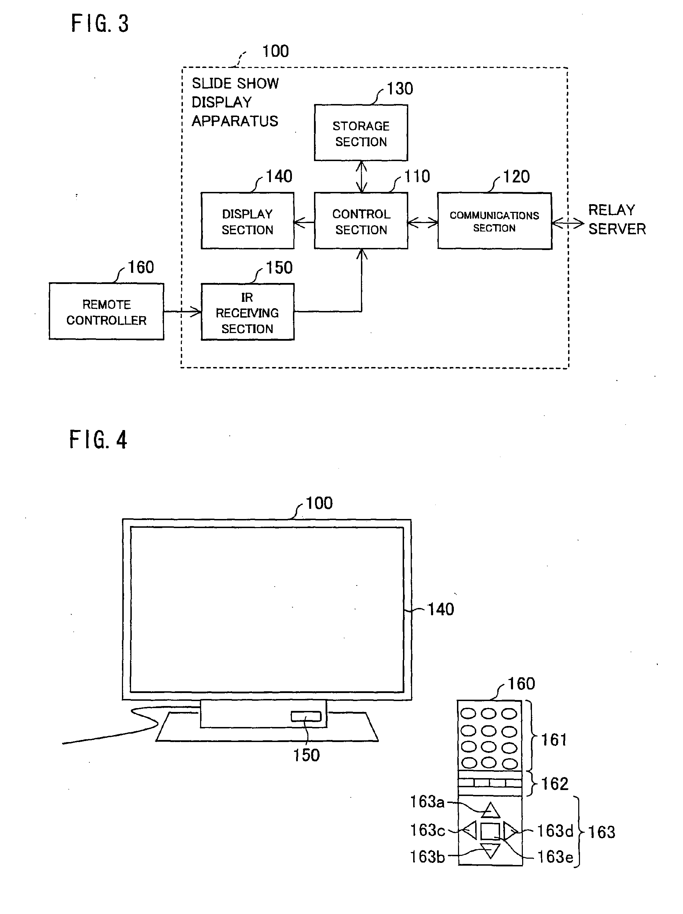

Fig. 3 relates to the embodiment of the present invention and is a functional block diagram illustrating a substantial part of the slide show display apparatus.
Fig. 4
Fig. 4 relates to an embodiment of the present invention and shows the external appearance of the slide show display apparatus.
Fig. 5

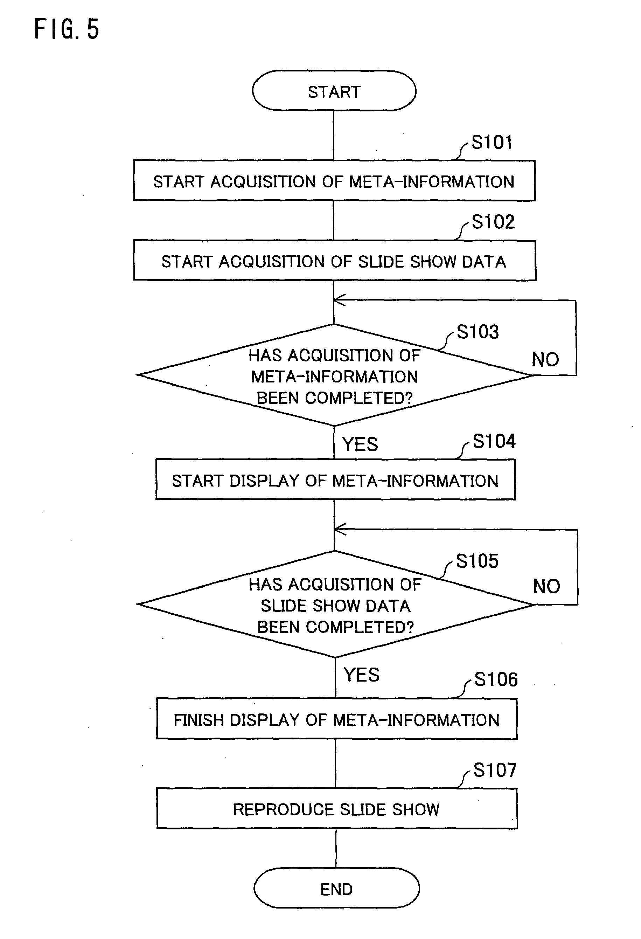

Fig. 5 relates to the embodiment of the present invention and is a flowchart which outlines processes performed in the slide show display apparatus.
Fig. 6

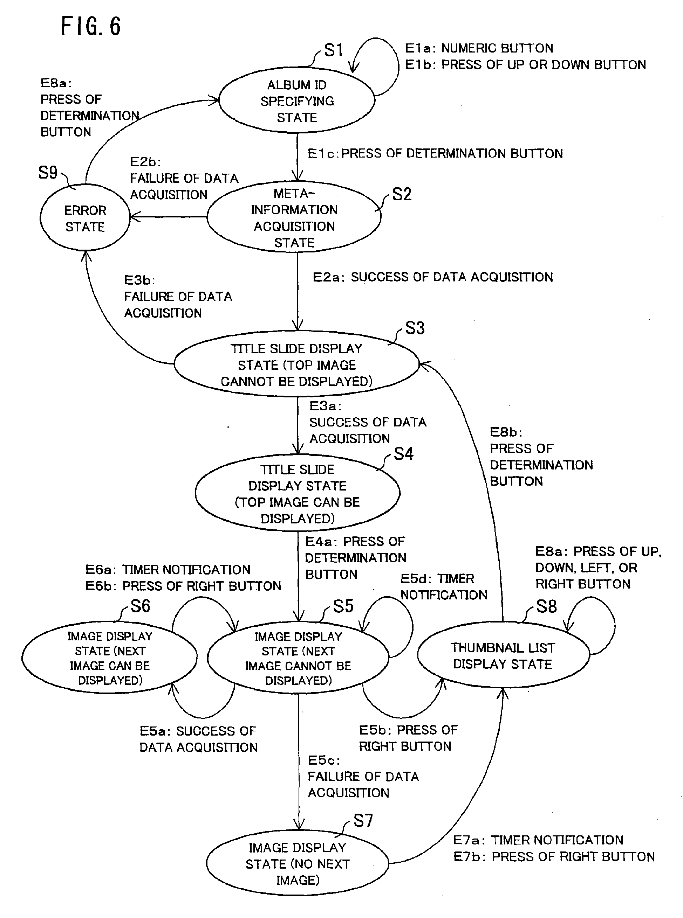

Fig. 6 relates to the embodiment of the present invention and is a state transition figure which defines the operation of the control section of the slide show display apparatus.
Fig. 7

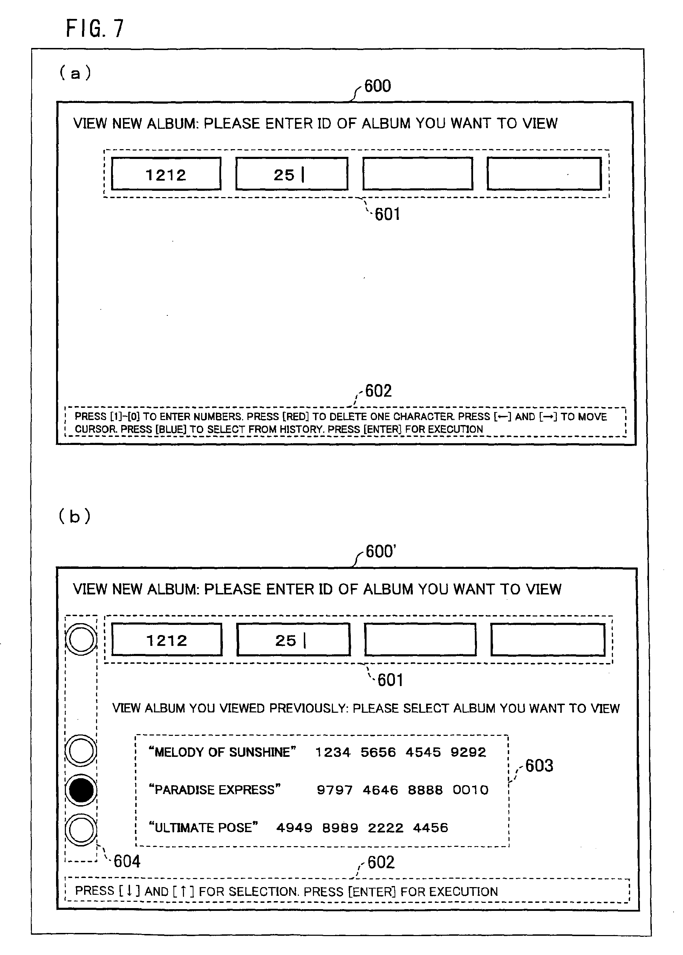

Fig. 7 relates to the embodiment of the present invention and (a) of Fig. 7 shows an example of a display screen displayed on a display section in an album ID specifying state. (b) of Fig. 7 shows another example of a display screen displayed on the display section in an album ID specifying state.
Fig. 8

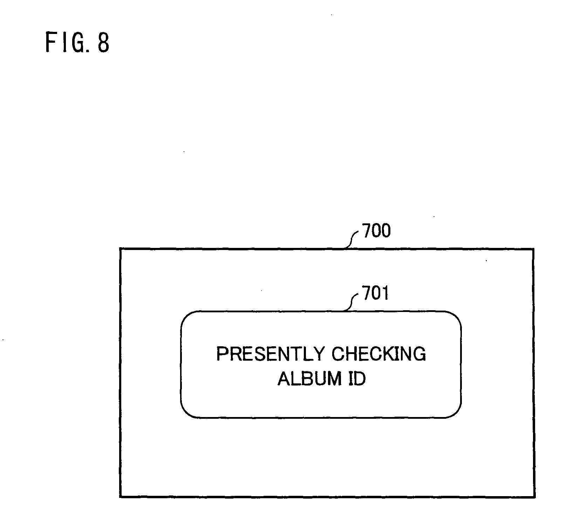

Fig. 8 relates to the embodiment of the present invention and shows an example of a display screen displayed on the display section in a meta-information acquiring state.
Fig. 9

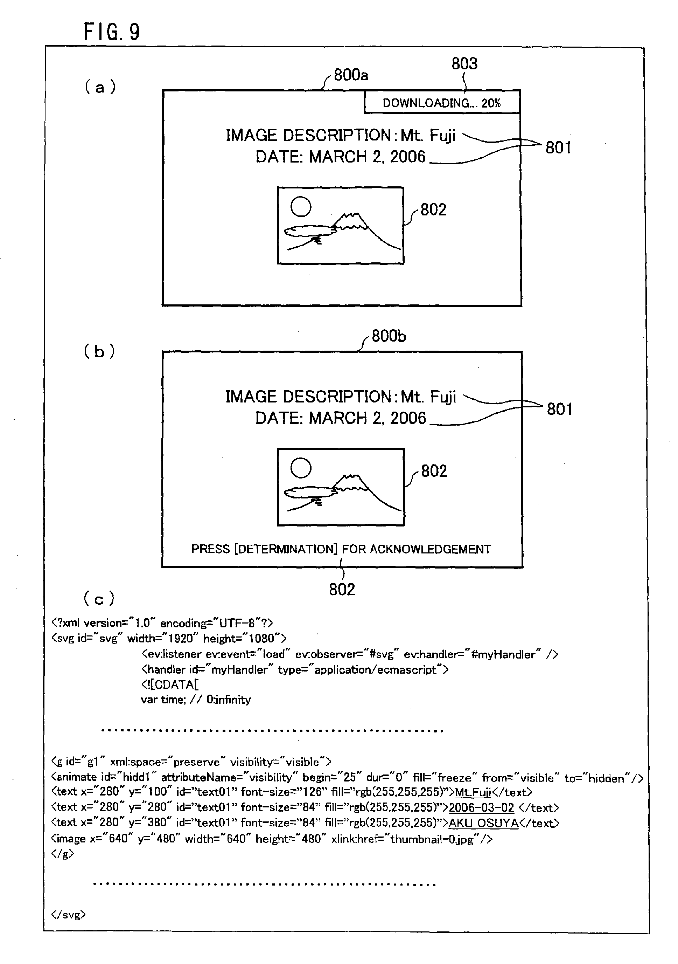

Fig. 9 relates to the embodiment of the present invention and (a) of Fig. 9 shows an example of a display screen displayed on the display section in a title slide display state (a top image cannot be displayed). (b) of Fig. 9 shows an example of a display screen displayed on the display section in a title slide display state (a top image can be displayed). (c) of Fig. 9 shows an example of a title slide display screen generating script for generating the title slide display screen shown in (a) of Fig. 9.
Fig. 10

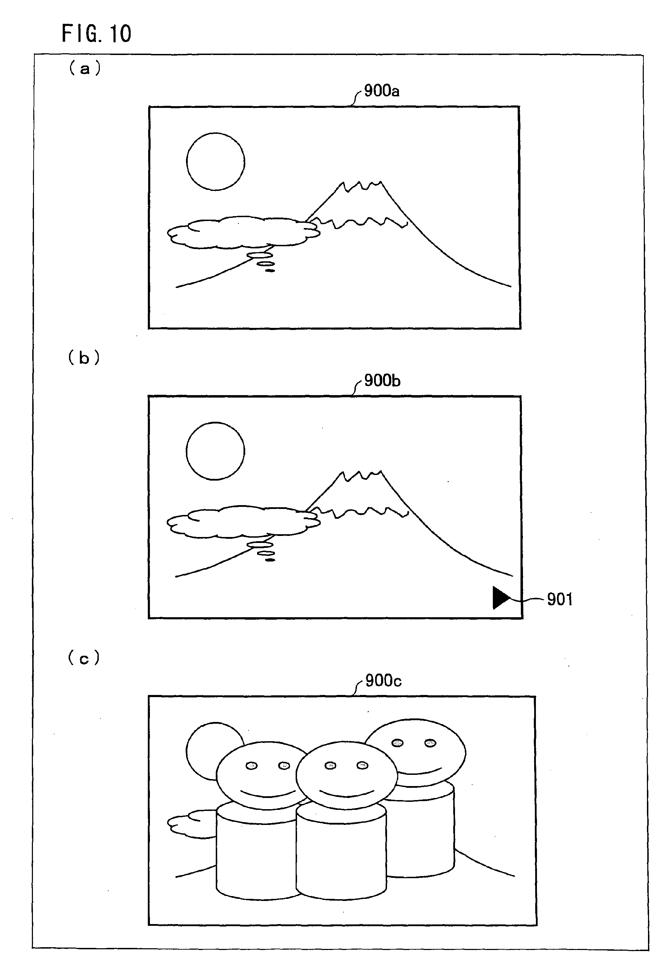

Fig. 10 relates to the embodiment of the present invention and (a) of Fig. 10 shows an example of a display screen including a top image, which is displayed on the display section in an image display state (next image cannot be displayed). (b) of Fig. 10 shows an example of a display screen including a top image, which is displayed on the display section in an image display state (next screen has been acquired). (c) of Fig. 10 shows an example of a display screen including another image, which is displayed on the display section in an image display state (next image cannot be displayed).
Fig. 11

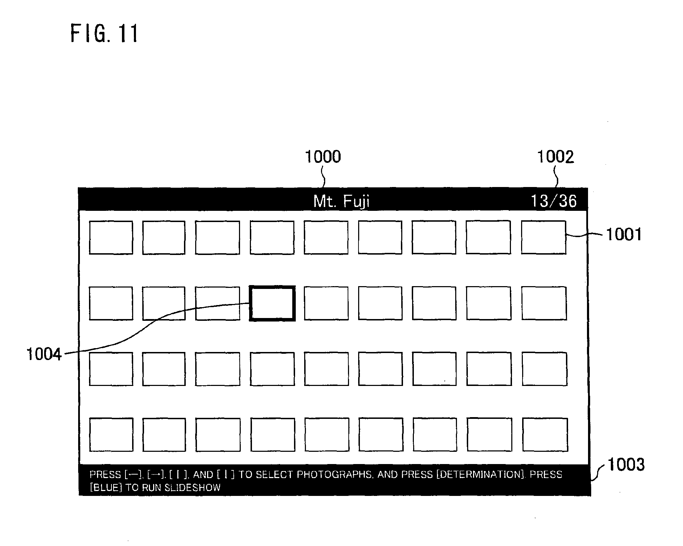

Fig. 11 relates to the embodiment of the present invention and shows an example of a display screen displayed on the display section in a thumbnail list display state.
Fig. 12

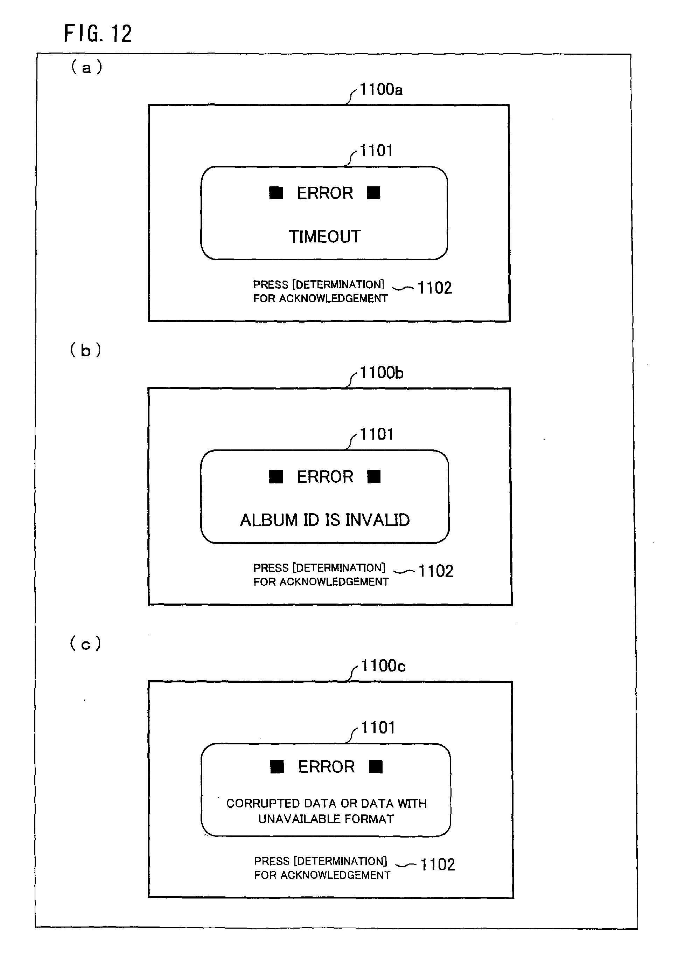

Fig. 12 relates to the embodiment of the present invention and (a) of Fig. 12 shows an example of a display screen displayed on the display section in an error state. (b) of Fig. 12 shows an example of another display screen displayed on the display section in an error state. (c) of Fig. 12 shows an example of a further display screen displayed on the display section in an error state.
Fig. 13

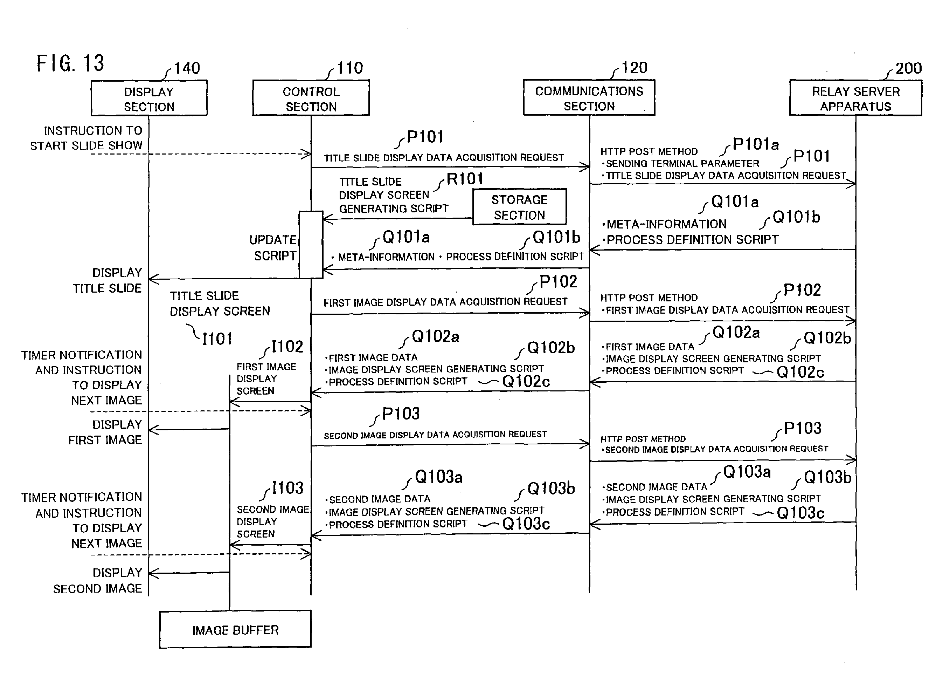

Fig. 13 relates to the embodiment of the present invention and is a sequence diagram showing how meta-information and slide show data are acquired.
Fig. 14

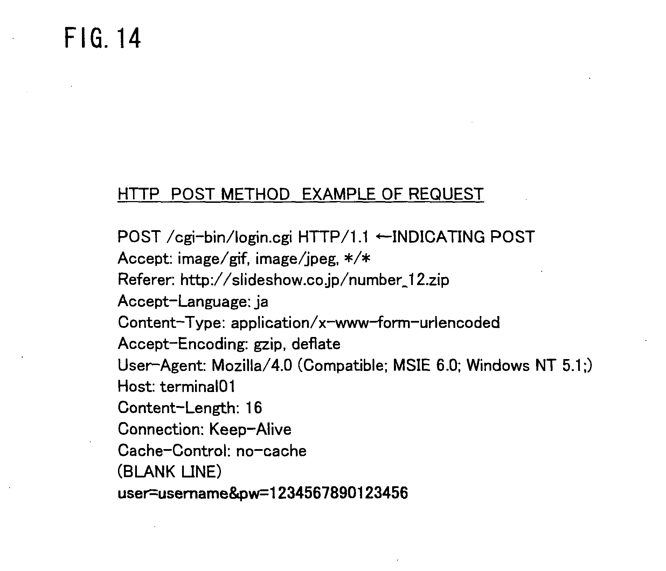

Fig. 14 relates to the embodiment of the present invention and shows the content of an HTTP POST method request supplied from a slide show display apparatus.
Fig. 15

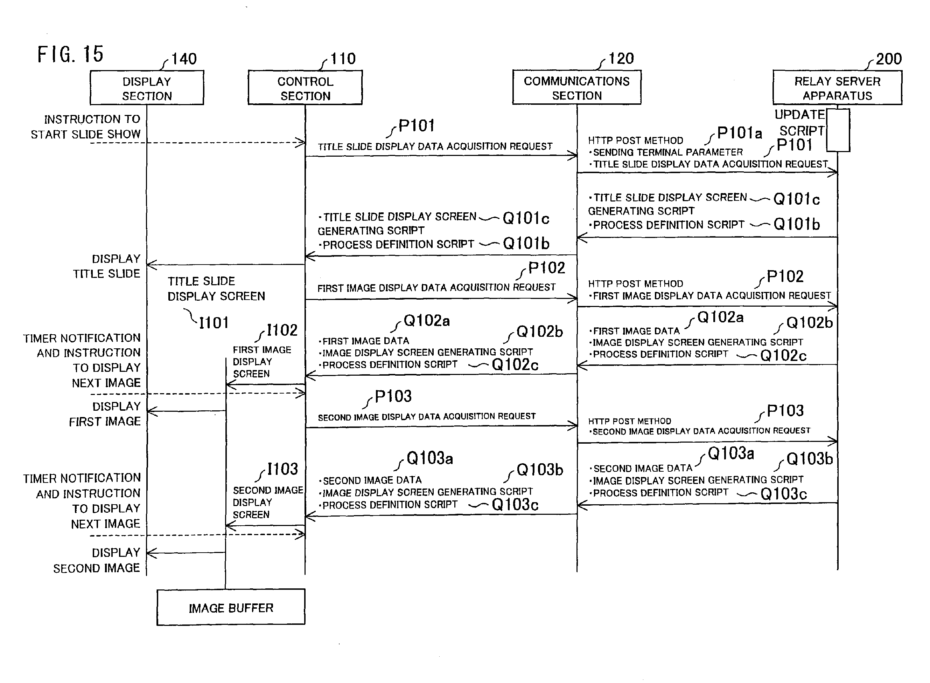

Fig. 15 relates to the embodiment of the present invention and is a sequence diagram of a variant example of how meta-information and slide show data are acquired in the slide show display apparatus.
Fig. 16

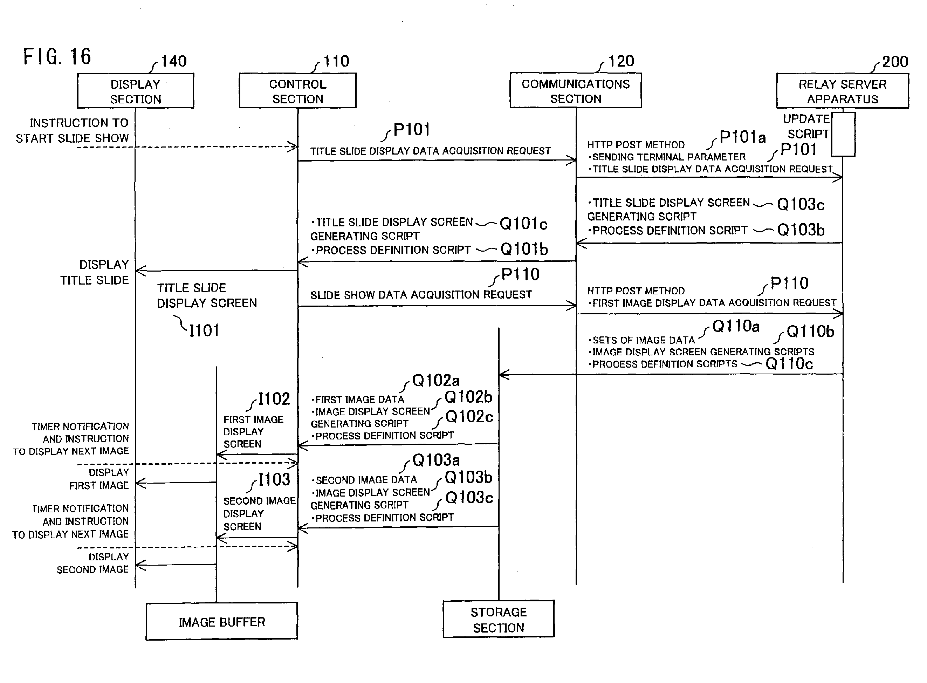

Fig. 16 relates to the embodiment of the present invention and is a sequence diagram of another variant example of how meta-information and slide show data are acquired in the slide show display apparatus.
Fig. 17

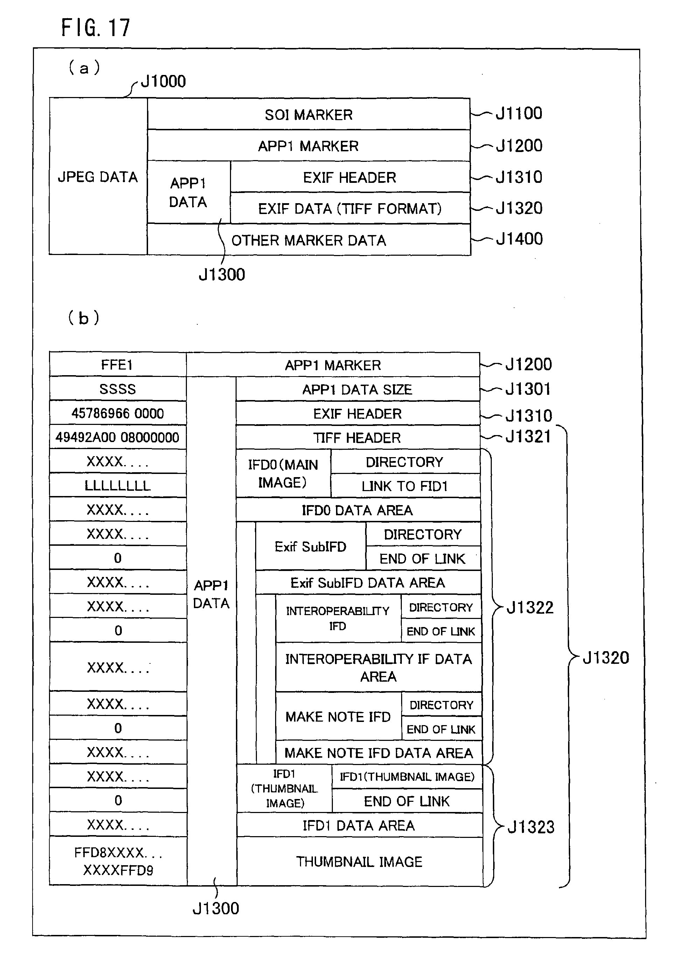

Fig. 17 relates to the embodiment of the present invention and (a) of Fig. 17 shows a data structure of JPEG data. (b) of Fig. 17 shows details of the data structure of the JPEG data.
Fig. 18

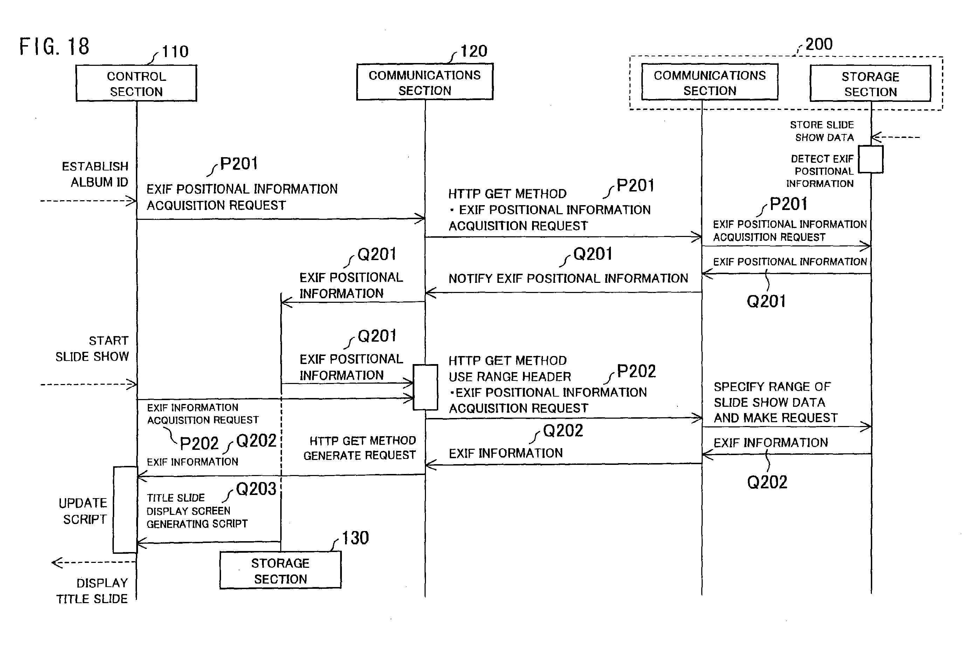

Fig. 18 relates to the embodiment of the present invention and is a sequence diagram showing a specific example of how meta-information is acquired in the slide show display apparatus.
Fig. 19

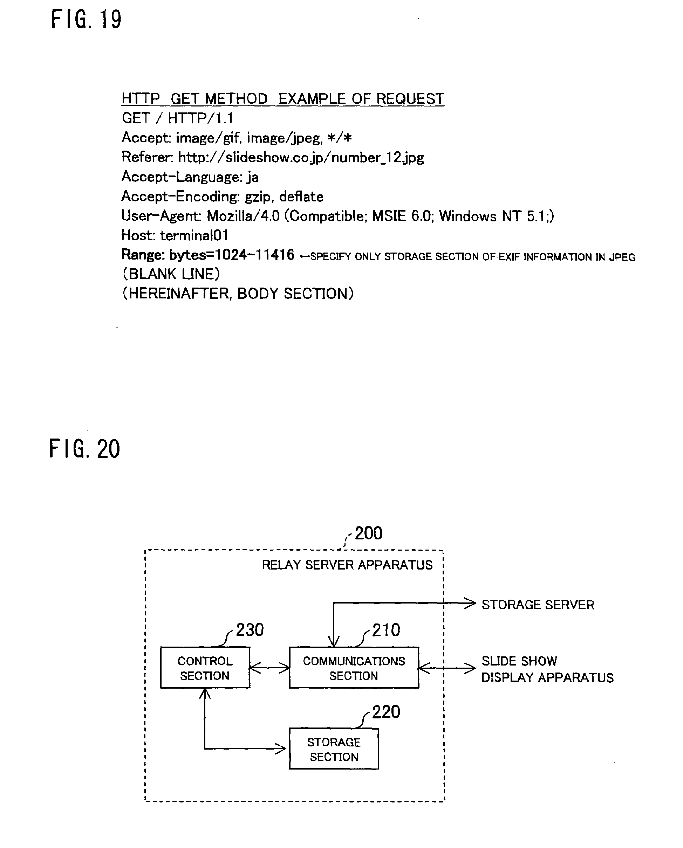

Fig. 19 relates to the embodiment of the present invention and shows the content of an HTTP GET method request supplied from the slide show display apparatus.
Fig. 20

Fig. 20 relates to the embodiment of the present invention and is a functional block diagram which outlines a relay server apparatus.
Fig. 21

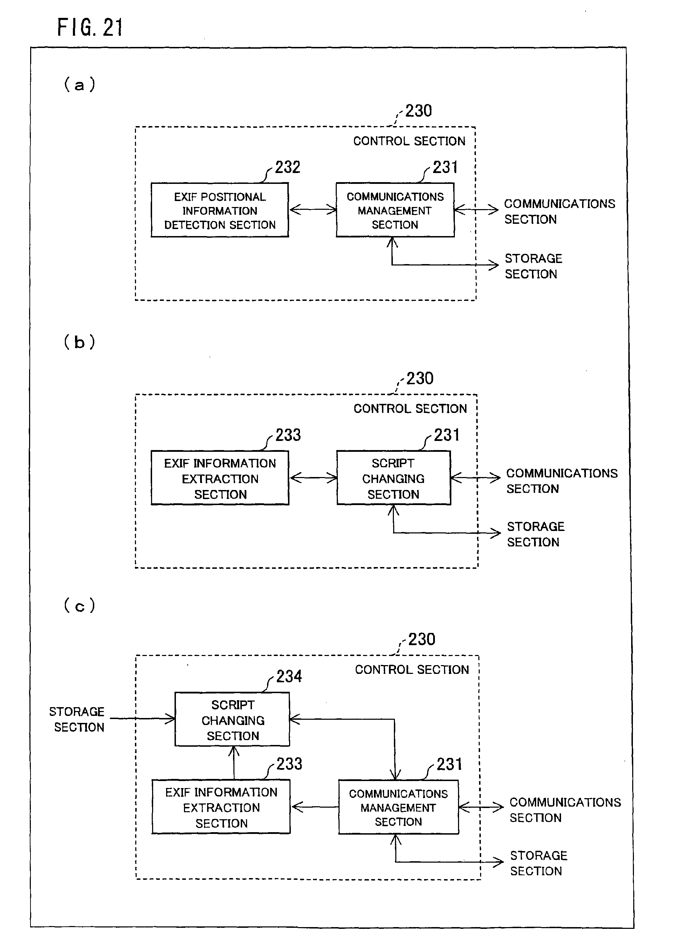

(a), (b), and (c) of Fig. 21 relate to the embodiment of the present invention and are functional block diagrams showing substantial parts of a control section of the relay server apparatus shown in Fig. 20.
Fig. 22

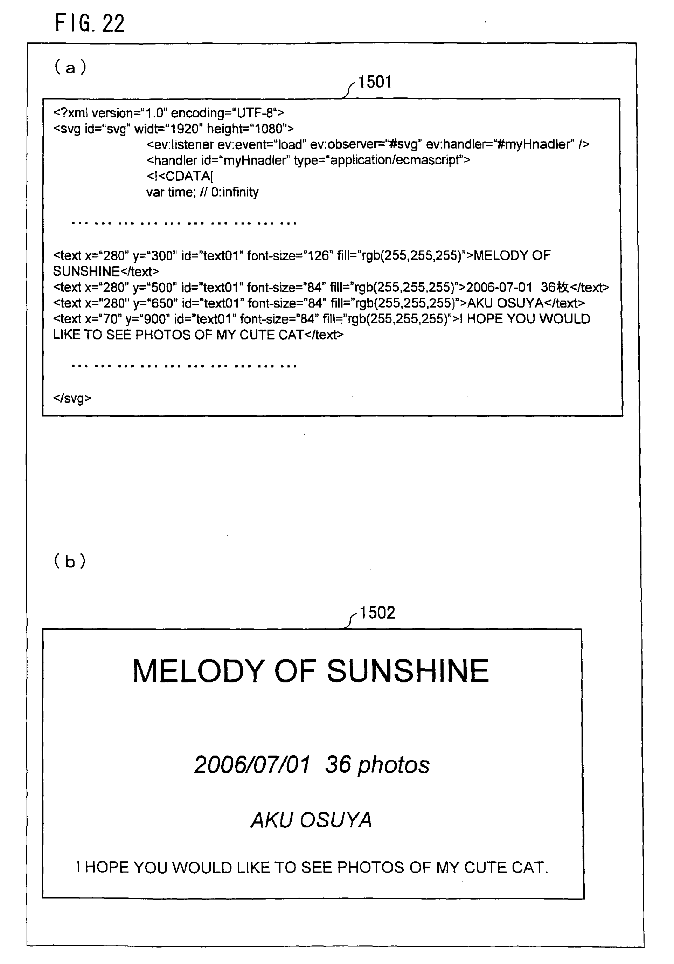

Fig. 22 relates to a variant example of the embodiment of the present invention and (a) of Fig. 22 shows an example of a title slide display screen generating script that the slide show display apparatus acquires in place of meta-information, from the relay server apparatus. (b) of Fig. 22 shows a display screen displayed based on the title slide display screen generating script shown in (a) of Fig. 22.
Fig. 23

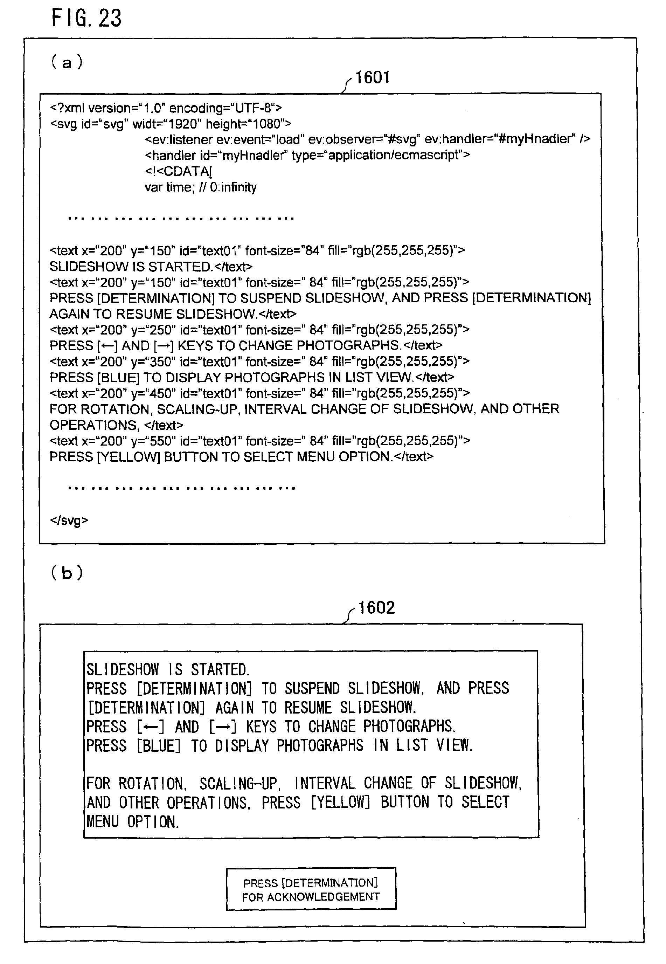

Fig. 23 relates to another variant example of the embodiment of the present invention and (a) of Fig. 23 shows an example of an operation illustration slide display screen generating script that the slide show display apparatus acquires in place of meta-information, from the relay server apparatus. (b) of Fig. 23 shows a display screen displayed based on the operation illustration slide display screen generating script shown in (a) of Fig. 23.

Explanation of Referential Numerals

1: SLIDE SHOW DISPLAY SYSTEM (Content reproduction system)
100: SLIDE SHOW DISPLAY APPARATUS (Content reproduction apparatus)
110: CONTROL SECTION
120: COMMUNICATIONS SECTION
130: STORAGE SECTION
140: DISPLAY SECTION
150: IR RECEIVING SECTION
160: REMOTE CONTROLLER
111: EVENT PROCESS SECTION
112: DATA MANAGEMENT SECTION (Meta-information acquisition means, area specifying information acquisition means)
113: DISPLAY SCREEN GENERATING SECTION (Content reproduction means)
114: IMAGE DATA EXPANSION SECTION
115: DISPLAY CONTROL SECTION (Display control means)
116: TIMER SECTION
117: USER OPERATION ANALYSIS SECTION
118: SCRIPT CHANGING SECTION
119: REPRODUCTION PREPARATION TIME ESTIMATION SECTION (Reproduction preparation time estimation means)
200: RELAY SERVER APPARATUS (Content data sending means)
210: COMMUNICATIONS SECTION
220: STORAGE SECTION
230: CONTROL SECTION

231: COMMUNICATIONS MANAGEMENT SECTION (meta-information sending means, area specifying information sending means)

232: EXIF POSITIONAL INFORMATION DETECTION SECTION

233: EXIF INFORMATION EXTRACTION SECTION (Meta-information extraction means)

234: SCRIPT CHANGING SECTION

300: STORAGE SERVER APPARATUS

Description of Embodiments

A content reproduction apparatus of the present invention may be realized as, for example, a slide show display apparatus which reproduces a slide show.

The following will discuss, as an embodiment of the present invention, a slide show display apparatus (content reproduction apparatus), a relay server apparatus (content data sending apparatus), and a slide show reproduction system (content reproduction system) including these apparatuses.

(Slide Show Reproduction System 1)

For a start, a slide show reproduction system 1 of the present embodiment will be outlined.

Fig. 2 outlines the slide show reproduction system 1. As shown in this figure, the slide show reproduction system 1 includes a slide show display apparatus 100, a relay server apparatus 200, and a storage server apparatus 300.

As shown in Fig. 2, the slide show reproduction system 1 may include plural slide show display apparatus 100. Each slide show display apparatus 100 may be, for example, a television receiver provided in the home of the user, as discussed below.

The slide show display apparatus 100 acquires slide show data (content data) from the relay server 200 and reproduces the acquired slide show data. "Reproducing slide show data" indicates that a group of images in slide show data is displayed as a slide show, i.e. images included in slide show data are serially displayed. The slide show display apparatus 100 can display a display screen including meta-information in regard to a slide show, until the reproduction of the slide show becomes ready to start.

The relay server apparatus 200 sends, to the slide show display apparatus 100, slide show data and meta-information included in the slide-show data. As shown in Fig. 2, the relay server apparatus 200 and the slide show display apparatus 100 are connected to one another over a network 400 such as the Internet, and hence these apparatuses can communicate one another.

The storage server apparatus 300 stores image data included in slide show data supplied from the relay server apparatus 200. The relay server apparatus 200 and the storage server apparatus 300 are, for example, provided in an office of an administrator of the slide show reproduction system 1. Although Fig. 2 shows that the relay server apparatus 200 and the storage server apparatus 300 are different apparatuses, these apparatuses may be integrated into a single apparatus.

The relay server apparatus 200 manages sets of image data stored in the storage server apparatus 300, in units of 'albums' (image groups). Each album is a group of plural sets of image data, and has album attributes such as album ID, album title, creation date of the album, creator of the album, and the number of images in the album.

The slide show display apparatus 100 sends, to the relay server apparatus 200, a slide show data acquisition request including an album ID which specifies a desired album. In response to this request, the relay server apparatus 200 returns, to the slide show display apparatus 100, slide show data of the album specified by the album ID. As a result, the slide show display apparatus 100 acquires the slide show data for reproducing the desired album.

The slide show data includes image data of images included in the album and an image display screen generating script including layout specification information by which the layout of an image display screen for displaying the images is specified. The slide show data may further include image data of thumbnails and a thumbnail list display screen generating script which stores layout specification information by which the layout of a thumbnail list display screen which lists the thumbnails is specified. In addition to these display screen generating scripts for displaying the display screens, the slide show data may further include a process definition script including process definition information which defines, in reproduction of a slide show, processes executed by the slide show display apparatus 100 and timings to execute the processes.

Each of the display screen generating scripts such as the image display screen generating script and thumbnail list display screen generating script may be constructed as text data described using XML. In such a case, the layout specification information is described using SVG, for example. The process definition script may also be constructed as XML-described text data. In such a case, the process definition information is described using MTD (Message Template Definition), for example.

The slide show display apparatus 100 may at once acquire slide show data including image data of all images in an album, or may acquire slide show data in a divided manner. In the latter case, when, for example, it is required to display images in an album, the following items are acquired: image data of the images; an image display screen generating script for generating an image display screen on which the images are displayed; and a process definition script which defines a process which must be executed while the images are displayed.

As discussed above, the slide show display apparatus 100 is characterized by displaying meta-information in regard to a slide show to be displayed, until the reproduction of the slide show becomes ready to start. Therefore, the slide show display apparatus 100 acquires from the relay server apparatus 200 meta-information of an album to be reproduced as a slide show, independently of slide show data.

The relay server apparatus 200 sends, as meta-information in regard to a slide show, meta-information stored in the slide show data to the slide show display apparatus 100. Any type of information included in slide show data may be adopted as the meta-information supplied from the relay server apparatus 200. The following, however, basically assumes that meta-information is stored in image data which belongs to the album, more specifically, meta-information is EXIF information stored in image data of the first JPEG image.

Receiving meta-information, the slide show display apparatus 100 displays, as a title slide, the received meta-information until the reproduction of the slide show becomes ready to start. More specifically, the slide show display apparatus 100 generates a title slide including the meta-information, by using a title slide display screen generating script, and displays the generated title slide.

The script for displaying the title slide includes the meta-information and layout specification information which specifies the layout of the display screen for displaying the meta-information. The script is, for example, realized as XML data described using SVG. The slide show display apparatus 100 may acquire and use a title slide displaying script in which meta-information is embedded by the relay server apparatus 200. Alternatively, meta-information acquired from the relay server apparatus 200 may be embedded into a title slide displaying script which has been stored in the slide show display apparatus 100 in advance.

As the below-mentioned variant example shows, the slide show display apparatus 100 may be alternatively arranged as follows: a display screen generating script (second content data) for generating a display screen including information concerning a slide show to be reproduced is acquired from the relay server apparatus 200, prior to other types of slide show data, and the display screen generated based on the display screen generating script is displayed until it becomes possible to display a display screen including the first image in the album (i.e. it becomes possible to start to reproduce first set of content data). In this case, examples of the display screen which is displayed until the reproduction of the slide show becomes ready to start include a title slide display screen including the title of the album which is to be reproduced as a slide show and an operation instruction slide display screen including instructions of operations that the user can perform while the slide show is reproduced.

(Slide Show Display Apparatus 100)

Now, the slide show display apparatus 100 will be outlined with reference to Figs. 3 and 4. Fig. 3 is a functional block diagram showing a substantial part of the slide show display apparatus 100. Fig. 4 outlines the slide show display apparatus 100.

As shown in Fig. 3, the slide show display apparatus 100 includes a control section 110, a communications section 120, a storage section 130, a display section 140, and an IR receiving section 150. The slide show display apparatus 100 operates in response to a user's instruction input to a remote controller 160.

The communications section 120 is a communications interface for exchanging various types of data with the relay server apparatus 200. The control section 110 can exchange data with the relay server apparatus 200 by means of the communications section 120.

The storage section 130 is a storage device such as memory. The control section 110 can store, in the storage section 130, data acquired from the relay server apparatus 200 via the communications section 120. Also, the storage section 130 stores various types of data used for reproducing a slide show, in advance. The control section 110 can read out such data at a given point in time and can use the same.

The remote controller 160 sends, to the IR receiving section 150, operation information indicating the content of an instruction from the user. In doing so, the operation information is carried by an infrared carrier wave. Based on the operation information acquired by the IR receiving section 150, the control section 110 executes information processes. A primary information process executed by the control section 110 is to generate display a screen based on data acquired by the communications section 120 and data stored in the storage section 130, and displays the screen on the display section 140. Functions of the control section 110 will be detailed later.

As shown in Fig. 4, the slide show display apparatus 100 is achievable as a television receiver, for example. In case where the slide show display apparatus 100 is achieved as a television receiver, the display panel of the television receiver can be used as the display section 140. It is therefore possible to display a dynamic slide show.

Fig. 4 shows an example of the remote controller 160. According to the figure, the remote controller 160 includes numeric button section 161 and a direction pad section 163.

As shown in Fig. 4, the numeric button section 161 includes at least numeric buttons corresponding to the numbers 0 to 9. The user appropriately pushes these buttons so as to input digits.

The command button section 162 includes command buttons such as "menu" button and "return" button. These command buttons are associated with commands which are selectable at the time, in accordance with the progress of a process in the slide show display apparatus 100. The user pushes one of these buttons so as to input, among the selectable commands at the time, the command associated with the button thus pushed. For example, the menu button is associated with a command to display a menu dialog, whereas the return button is associated with a command to hide the menu dialog.

The direction pad section 163 includes four buttons (up button 163a, down button 163b, left button 163c, and right button 163d) corresponding to up, down, left, and right, respectively, and a determination button 163e surrounded by the four buttons. The user pushes the up, down, left, and right buttons 163a-163d so as to indicate a desired object among objects displayed on the display section 140, and selects the currently-indicated object by pushing the determination button 163e.

For example, the user is allowed to select a desired image among listed thumbnails and to select a desired menu in a menu dialog displayed, by means of the menu button. The buttons 163a-163e in the direction pad section 163 may be associated with functions other than indication and selection of an object, in accordance with the progress of a process in the slide show display apparatus 100. For example, while a slide show is reproduced, the right button 163d is associated with a command to display the image subsequent to the currently displayed image. The left button 163c is associated with a command to display the image prior to the currently-displayed image. The determination button 163e is associated with a command to, for example, activate a slide show display application, to temporarily stop the slide show, or to start reproduction.

Now, the flow of processes in the slide show display apparatus 100 will be outlined with reference to Fig. 5. Fig. 5 is a flowchart which outlines the flow of processes in the slide show display apparatus 100.

As shown in Fig. 5, receiving from the user a reproduction start instruction to start reproduction of a slide show, the slide show display apparatus 100 starts to acquire meta-information and slide show data (S101, S102). According to the flowchart in Fig. 5, the acquisition of slide show data starts (S 102) after the acquisition of meta-information starts (S101). However, since these processes of acquisition are independent from each other, the order of the processes is not limited to the order shown in Fig. 5.

Subsequently, the slide show display apparatus 100 repeatedly carries out the step S103 by which whether the acquisition of meta-information has been completed is determined, until the acquisition is completed. After the completion of the acquisition of meta-information (YES in S103), display of meta-information as a title slide starts (S104).

Then, while displaying meta-information as a title slide, the slide show display apparatus 100 repeatedly carries out the step (S105) of determining whether the acquisition of slide show data has been completed, until the acquisition of slide show data is completed. After the completion of the acquisition of slide show data (YES in S105), the display of the title slide (meta-information) is finished (S106) and reproduction of a slide show starts (S107).

As such, the slide show display apparatus 100 displays the acquired meta-information as a title slide, during a period after the user's instruction to start reproduction is supplied and before the acquisition of slide show data is completed and reproduction of the slide show becomes ready to start. After the acquisition of the slide show data is completed, the slide show display apparatus 100 starts to reproduction the slide show.

(Control Section 110 of Slide Show Display Apparatus 100)

The slide show display apparatus 100 is characterized by the control section 110 which displays display screens on the display section 140 in line with the flowchart shown in Fig. 5. This control section 110 will be discussed below with reference to Figs. 1 and 6-12.

First, in what manner the control section 110 is constructed is illustrated with reference to Fig. 1.

Fig. 1 is a functional block diagram showing the control section 110 in the slide show display apparatus 100. As shown in this figure, the control section 110 includes an event process section 111, a data management section (meta-information acquisition means, area specifying information acquisition means) 112, a display screen generating section 113, an image data expansion section 114, a display control section (display control means) 115, a timer section 116, a user operation analysis section 117, script changing section 118, and a reproduction preparation time estimation section (reproduction preparation time estimation means) 119.

The data management section 112 is a block for acquiring various types of data from the relay server apparatus 200. Examples of the types of data that the data management section 112 acquires include the aforesaid slide show data and meta-information of a slide show. In accordance with an instruction from the event process section 111, the data management section 112 sends, to the relay server apparatus 200, a data acquisition request to acquire the data, via the communications section 120. The data management section 112 sends a data acquisition success notification to the event process section 111 if the section 112 succeeds in acquiring the data. The data management section 112 sends a data acquisition failure notification to the event process section 111, if the section 112 fails to acquire the data. The data management section 112 stores the acquired data in the storage section 130.

The display screen generating section 113 is a block to generate various display screens displayed on the display section 140, based on display screen generating scripts. Examples of display screens generated by the display screen generating section 113 include a title slide display screen which is displayed until reproduction of a slide show starts, an image display screen which is displayed while a slide show is reproduced and which serially shows images in an album, and a thumbnail list display screen which lists thumbnails of images in an album. The display screen generating section 113 acquires, from the data management section 112, a display screen generating script required for generating a display screen. The display screen generating section 113 generates a display screen based on such a display screen generating script, and sends the generated display screen to the display control section 115.

The image data expansion section 114 is a block to expand image data of an image to be displayed, in order to cause the image to be immediately displayable. Expansion by the image data expansion section 114 is required when, for example, image data is generated by compressing or encoding image information, such as JPEG data. JPEG data included as image data in slide show data is expanded by the image data expansion section 114.

The display control section 115 is a block to display, on the display section 140, display screens generated by the display screen generating section 113. In response to an instruction from the event process section 111, the display section 140 is controlled to display a display screen generated by the display screen generating section 115.

The timer section 116 sends a timer notification to the event process section 111, after a predetermined period of time has elapsed after the activation. When an operation by the user is detected via the IR receiving section 150, the user operation analysis section 117 sends, to the event process section 111, an operation information notification indicating the content of the operation.

The script changing section 118 is a block to update a title slide display screen generating script which is stored in the storage section 130 in advance, based on meta-information acquired from the relay server apparatus 200. More specifically, to a predetermined part of a title slide display screen generating script, a character string acquired as meta-information is embedded, so that a title slide display script for displaying meta-information is generated.

The reproduction preparation time estimation section 119 is a block to estimate a reproduction preparation time which is required for preparation of a slide show. More specifically, for example, the reproduction preparation time estimation section 119 estimates (i) time required for acquiring a part of slide show data, which is necessary to start reproduction of a slide show and (ii) time required for expanding the acquired slide show data, by the following equations.

(i) Time required for acquisition = data size of slide show data / communication speed

(ii) Time required for expansion = data size of slide show data / speed of expansion process

The reproduction preparation time estimation section 119 estimates reproduction preparation time by the following equation, for example.

Reproduction preparation time = time required for acquisition + time required for expansion

The event process section 111 manages timings that the control section 110 execute processes, based on the aforesaid notifications supplied from the data management section 112, the timer section 116, and the user operation analysis section 117.

More specifically, based on the process definition script in the slide show data, the event process section 111 determines processes to be executed and a next state to which the operation transits, in consideration of the content of the supplied notification and the current state. The processes to be executed include a pre-transition process which must be executed before the state transition and a post-transition process which must be executed after the state transition. In other words, receiving a notification, the event process section 111 (1) controls the sections in the control section in such a way as to execute the pre-transition process defined by the process definition script, (2) transits the current state to a state defined by the process definition script, and (3) controls the sections in the control section 110 in such a way as to execute the post-transition process defined by the process definition script.

Fig. 6 represents the process definition script acquired as slide show data, as a single state transition diagram. Operations of the event process section 111 are defined by the state transition diagram.

As shown in Fig. 6, the following 9 states are defined in advance, as states that the event process section 111 is able to take: an album ID specifying state S1; a meta-information acquiring state S2; a title slide display state (top image cannot be displayed) S3; title slide display state (top image can be displayed) S5; an image display state (next image can be displayed) S6; an image display state (next image does not exist) S7; a thumbnail list display state S8; and an error state S9. At the respective time points, the event process section 111 takes one of these 9 states.

(Flow of Processes in Control Section 110)

The flow of processes in the control section 110 is defined by the state transition diagram shown in Fig. 6. The flow of processes in the control section 110 will therefore be discussed with reference to Fig. 6 as below. The discussion below also refers to Figs. 7-12 to illustrate display screens presented to the user in respective states.

Album ID Specifying State S 1

In the album ID specifying state S1, the user is prompted to specify an album ID. In the album ID specifying state S1, the display control section 115 causes the display section 140 to display, for example, an album ID specifying screen 600 shown in (a) of Fig. 7 or an album ID specifying screen 600' shown in (b) of Fig. 7. These display screens are generated by the display screen section 113 based on, for example, an album ID specifying screen generating script which is stored in the storage section 130 in advance and is described using SVG.

The album ID specifying screen 600 shown in (a) of Fig. 7 prompts the user to input an album ID of a desired album. This album ID specifying screen 600 includes an album ID display area 601 for displaying an album ID input by the user and an acceptable command display area 602 for listing commands that the user can input. While checking the numbers displayed on the album ID display area 601 that the user has input, the user can input an album ID by pushing the buttons in the numerical button section 161 of the remote controller 160. Also, the user can input a command displayed in the acceptable command display area, by pushing appropriate buttons on the remote controller 160. For example, numbers which are currently displayed in the album ID display area 601 are selected as an album ID of a desired album, if the determination button 163e is pushed.

In addition to the album ID display area 601 and the acceptable command display area 602, the album ID specifying screen 600' shown in (b) of Fig. 7 further includes: a viewed album list 603 which lists album titles of albums which have already been viewed; and indicators 604 which are associated with album titles listed in the album ID display area 601 and the viewed album list 603. In a state in which input of an album ID, which is carried out by pushing buttons in the numerical button section 161, is acceptable, the indicator corresponding to the album ID display area 601 is highlighted. In a state in which at least one of album titles in the viewed album list 603 is selected, the indicator corresponding to the selected album title is highlighted. In stead of newly inputting an album ID to the album ID display area 601, the user pushes the up button 163a and the down button 163b so as to select a desired album title among album titles listed in the viewed album list 603. After selecting the desired album title, the user pushes the determination button 163e. As a result, the album ID of the currently-selected album title is selected as the album ID of the desired album.

While the album ID specifying screen is displayed, the event process section 111 waits for an event notification. Events that the event process section 111 responds in the album ID specifying state S1 are: an event E1a indicating that a button in the numerical button section 161 has been pushed; an event E1b indicating that either the up button 163a or the down button 163b has been pushed; and an event E1c indicating the determination button 163e has been pushed.

Detecting that a button in the numerical button section 161 of the remote controller 160 has been pushed, the user operation analysis section 117 sends, to the event process section 111, an operation information notification which notifies that the event E1a has occurred. In response to the supplied operation information notification, the event process section 111 updates an album ID, in accordance with the numbers corresponding to the pushed buttons. Also, the event process section 111 instructs the display control section 115 to update the display screen. In response to the instruction, the display control section 115 controls the display section 140 so that an updated album ID is displayed in the album ID display area 601.

Detecting that the up button 163a or the down button 163b of the remote controller 160 has been pushed, the user operation analysis section 117 sends, to the event process section 111, an operation information notification which notifies that the event E1b has occurred. This operation information notification includes information indicating which button, i.e. the up button or the down button, has been pushed. In response to the operation information notification, the event process section 111 updates, in accordance with the type of the button thus pushed, album selection state information indicating which album has been selected in the viewed album list 603. Also, the event process section 111 instructs the display control section 115 to update a display screen. In response to the instruction, the display control section 115 re-draws radio buttons 604 to highlight the radio button corresponding to the currently-selected album, in accordance with the album selection state information.

Detecting that the determination button 163e of the remote controller 160 has been pushed, the user operation analysis section 117 sends, to the event process section 111, an operation information notification which notifies that the event E1c has occurred. In response to this operation information notification, the event process section 111 performs state transition to the below-mentioned meta-information acquiring state S2. Thereafter, the event process section 111 instructs the data management section 112 to acquire (i) meta-information of the album having the album ID specified by the user and (ii) slide show data for displaying a thumbnail list. In case where the user selects an album from the viewed album list 603, the album ID specified by the user is determined in accordance with the aforesaid album selection state information. The data management section 112 then sends, to the relay server apparatus 200, a meta-information acquisition request to acquire meta-information and a data acquisition request to acquire slide show data for displaying a thumbnail list. These acquisition requests include, as information, the album ID specified by the user. In accordance with the acquisition requests, the relay server apparatus 200 can return the meta-information of the album specified by the user and the slide show data for displaying the thumbnail list.

Meta-Information Acquiring State S2

The meta-information acquiring state S2 is a state to wait for a response to the previously-sent meta-information acquisition request from the relay server apparatus 200. In the meta-information acquiring state S2, the display control section 115 displays, for example, a display screen 700 shown in Fig. 8 on the display section 140. The display screen 700 can be generated by the display screen generating section 113, based on, for example, a display screen generating script which has been stored in the storage section 130 in advance and is described using SVG.

The display screen 700 shown in Fig. 8 notifies the user that a process to acquire meta-information is being carried out. The display screen 700 includes an appropriate character string 701 such as "album ID is being checked".

In the meta-information acquiring state S2, the event process section 111 waits for either an event E2a indicating that the data management section 112 has succeeded in acquiring meta-information or an event E2b indicating that the data management section 112 has failed to acquire meta-information.

After completing the acquisition of the meta-information supplied from the relay server apparatus 200 in response to the meta-information acquisition request, the data management section 112 sends, to the event process section 111, a data acquisition success notification which notifies that the event E2a has occurred. In response to the data acquisition success notification, the event process section 111 instructs the script changing section 118 to change the title slide display screen generating script. Receiving this instruction, the script changing section 118 changes the title slide display screen generating script which has been stored in the storage section 130 in advance, in accordance with the meta-information which has been acquired. More specifically, into a predetermined part of the title slide display screen generating script, the character string acquired as meta-information is embedded. Thereafter, the event process section 111 performs state transmission to the title slide display state (top image cannot be displayed) S3.

Subsequently, after the transition to the title slide display state (top image cannot be displayed) S3, the event process section 111 instructs the data management section 112 to acquire the top image of the album specified by the user. The data management section 112 sends, to the relay server apparatus 200, a top image acquisition request which requests acquisition of data for displaying the top image in the album.

Moreover, the event process section 111 instructs the display screen generating section 113 to generate a thumbnail list display screen. Based on the thumbnail list display screen generating script, the display screen generating section 114 generates a thumbnail list display screen for listing thumbnails on the display section 140, from image data of thumbnail images. The generated thumbnail list display screen is drawn off-screen in an image buffer, to allow the thumbnail list display screen to be displayed on the display section 140 at a timing to transit to the below-discussed thumbnail list display state S8.

In case where there is no response from the relay server apparatus 200 until a predetermined period of time elapses after the sending of the meta-information acquisition request, the data management section 112 sends, to the event process section 111, a data acquisition failure notification which notifies the occurrence of the event E2b. The data management section 112 also sends a data acquisition failure notification which notifies the occurrence of the event E2b to the event process section 111, when error information is supplied from the relay server apparatus 200 in response to the meta-information acquisition request. The relay server apparatus 200 supplies error information when, for example, an album having an album ID specified by the user is not under the management of the relay server apparatus 200. Receiving one of the aforesaid data acquisition failure notifications, the event process section 111 performs state transition to the error state S9. This error state S9 will be discussed later.

Title Slide Display State (Top Image Cannot Be Displayed) S3

The title slide display state (top image cannot be displayed) S3 is a state for waiting for either a response to the top image acquisition request from the relay server 200 (in a case of state transition from the meta-information acquiring state S2) or a response to the selection screen acquisition request from the relay server apparatus 200 (in a case of state transition from the state S8). In the title slide display state (top image cannot be displayed) S3, the display control section 115 displays, for example, a title slide display screen 800a shown in (a) of Fig. 9 on the display section 140. The title slide display screen 800a is generated by the display screen generating section 114, based on the title slide display screen generating script which has been changed by the script changing section 118, i.e. into which meta-information has been embedded.

The title slide display screen 800a displays a title slide and includes a character string 801 included in the acquired meta-information. Moreover, the title slide display screen 800a shown in (a) of Fig. 9 as an example includes a thumbnail 802 included in EXIF information acquired as meta-information. On the upper right periphery of the title slide display screen 800a, information 803 is displayed to indicate the progress of acquisition (e.g. "Downloading... 20%") of slide show data from the relay server apparatus 200 in response to the top image acquisition request or the selected image acquisition request. In case where the acquired slide show data include image data which requires expansion, information indicating the progress of expansion (e.g. "Decoding... 45%") of the image data is displayed in place of the information 803 indicating the progress of acquisition of the slide show data, after the acquisition of the slide show data is completed.

(c) of Fig. 9 shows an example of the title slide display screen generating script after being changed by the script changing section 118, which script is used for generating the title slide display screen 800a. In the title slide display screen generating script shown in (c) of Fig. 9, character strings such as "Mt. Fuji" and "March 2, 2006" are those extracted from meta-information and embedded into the script.

In the title slide display state (top image cannot be displayed) S3, the event process section 111 waits for either an event E3a indicating that the data management section 112 has succeeded in acquiring a top image or an event E3b indicating that the data management section 112 has failed to acquire a top image.

After completing acquisition of image data of a top image (selected image) supplied from the relay server apparatus 200 in response to the top image (selected image) acquisition request, the data management section 112 sends, to the event process section 111, a data acquisition success notification which notifies that the event E3a has occurred. In response to the data acquisition success notification, the event process section 111 instructs the display screen generating section 113 to generate a display screen by which the acquired top image (selected image) is displayed on the display section 140.

Receiving this instruction, the display screen generating section 113 generates a display screen by which the acquired top image (selected image) is displayed on the display section 140, and draws the same off-screen. In case where the image display screen generating script is used for displaying the top image, the display screen generating section 113 generates a display screen based on the layout specification information in the script, and draws the screen off-screen. When the acquired top image (selected image) is compressed image data, the display screen generating section 113 instructs the image data expansion section 114 to expand the image data. In response to this instruction, the image data expansion section 114 expands the acquired data so that the image data becomes displayable. After the display screen generation section 113 completes to draw the display screen off-screen, the event process section 111 performs state transition to the title slide display state (top image can be displayed) S4.

After the state transition to the title slide display state (top image can be displayed) S4, the event process section 111 instructs the display control section 115 to update the currently-displayed title slide display screen 800a. Receiving the instruction, the display control section 115 replaces the title slide display screen 800a shown in (a) of Fig. 9 with, for example, the title slide display screen 800b shown in (b) of Fig. 9. In addition to meta-information, the display screen 800b includes an acceptable command display area 804 which prompts the user, who has understood the outline of the slide show by the title slide, to push the determination button 163e. This process to notify the user that the top image (selected image) has become displayable may not be carried out, because the process is provided to make the user comfortable to operate the content reproduction apparatus.

In case where there is no response from the relay server apparatus 200 until a predetermined period of time elapses after the top image (selected image) acquisition request is sent, the data management section 112 sends, to the event process section 111, a data acquisition failure notification which notifies the occurrence of the event E3b. The data management section 112 also sends a data acquisition failure notification indicating the occurrence of the event E3b to the event process section 111, when abnormality is detected in data which is acquired in response to the top image (selected image) acquisition request. Receiving one of the aforesaid data acquisition failure notifications, the event process section 111 performs state transition to the error state S9. This error state S9 will be discussed later.

Title Slide Display State (Top Image Can Be Displayed) S4

The title slide display state (top image can be displayed) S4 is a state for waiting for the user to push the determination button 163e, after the acquisition of the top image (selected image) is completed. In the title slide display state (top image can be displayed) S4, the aforesaid title slide display screen 800b is displayed on the display section 140.

In the title slide display state (top image can be displayed) S4, the event process section 111 waits for an operation information notification which notifies that an event E4a has occurred. The event E4a indicates that the determination button 163e has been pushed.

Detecting that the determination button 163e of the remote controller 160 has been pushed, the user operation analysis section 117 sends, to the event process section 111, the operation information notification which notifies that the event E4a has occurred. In response to this operation information notification, the event process section 111 performs state transition to the image display state (next image cannot be displayed) S5.

After the state transition to the image display state (next image cannot be displayed) S5, the event process section 111 instructs the display control section 115 to display, on the display section 140, the top image (selected image). The display control section 115 displays, on the display section 140, a display screen for displaying the top image (selected image) which has already been drawn off-screen. Thereafter, the display control section 115 instructs the data management section 112 to acquire a next image to be displayed next. The data management section 112 sends, to the relay server apparatus 200, a next image acquisition requirement to acquire the next image. In addition, the event process section 111 activates the timer section 116.

As illustrated above, the slide show display apparatus 100 displays meta-information as a title slide, in the title slide display state (top image cannot be displayed) S3 and the title slide display state (top image can be displayed) S4. Alternatively, a reproduction preparation time required until reproduction of a slide show becomes ready to start may be estimated in advance, and a title slide may be displayed only when the estimated reproduction preparation time is not shorter than a predetermined threshold.

In such a case, referring to a reproduction start preparation time figured out by the reproduction preparation time estimation section 119, the event process section 111 controls the display control section 115 so that a title slide is displayed on the display section 140 only when the reproduction start preparation time is not shorter than a predetermined threshold (e.g. 1 second).

Image Display State (Next Image Cannot Be Displayed) S5

The image display state (next image cannot be displayed) S5 is a state for waiting for a response to a previously-sent next image acquisition requirement from the relay server apparatus 200.

In the image display state (next image cannot be displayed) S5, the display section 140 is displaying an image which has already been acquired. In other words, after state transition from the title slide display state (top image can be displayed) S4, a top image is being displayed on the display section 140. A top image display screen 900a shown in (a) of Fig. 10 illustrates an example of a display screen in which a top image of an album is displayed. After state transition from the below-discussed image display state (next image can be displayed) S6, the previous next image, i.e. an image which has already been acquired in the image display state (next image can be displayed) S6, is being displayed on the display section 140. A display screen 900c shown in (c) of Fig. 10 illustrates an example of an image display screen in which, as the previous next image, another image (e.g. fourth image) in an album is displayed.

In the image display state (next image cannot be displayed) S5, the event process section 111 waits for an event E5a which indicates that the data management section 112 has succeeded in acquiring the next image.

Completing the receipt of the next image supplied from the relay server apparatus 200 in response to the next image acquisition request, the data management section 112 sends, to the event process section 111, a data acquisition success notification which notifies the occurrence of an event E5a. Receiving the data acquisition success notification, the event process section 111 instructs the display screen generating section 113 to generate a display screen used for displaying the acquired next image on the display section 140.

In response to this instruction, the display screen generating section 113 generates an image display screen used for displaying the acquired next image on the display section 140, and draws the screen off-screen. In case where an image display screen generating script for displaying the next image has been supplied in addition to the image data of the next image, the display screen generating section 113 generates an image display screen from the image data of the next image, based on the layout information of the supplied image display screen generating script, and draws the screen off-screen. If the acquired image data of the next image is compressed data, the display section generating section 113 instructs the data expansion section 114 to expand the image data. In response to this instruction, the image data expansion section 114 immediately expands the image data of the next image so that the next image is displayable. After the display screen generating section 113 completes to draw the display screen off-screen, the event process section 111 performs state transition to the image display state (next image can be displayed) S6.

After the state transition to the image display state (next image can be displayed) S6, the event process section 111 instructs the display control section 115 to update the currently-displayed image display screens 900a and 900c. Receiving the instruction, the display control section 115 replaces, for example, the image display screen 900a shown in (a) of Fig. 10 with the display screen 900b shown in (b) of Fig. 10, in order to notify the user that the next image has become displayable. The image display screen 900b includes a right-pointing allow-shaped icon 901 to specifically indicate that the next image can be displayed in response to push of the right button. This process to notify the user that the next image has become displayable may not be carried out, because the process is provided to make the user comfortable to operate the content reproduction apparatus.

When display of the next image becomes ready, i.e. when the acquisition of the image data of the next image is completed and the expansion of the image data of the next image is completed, the event process section 111 immediately performs state transition to the image display state (next image can be displayed) S6. In other words, the state S5 in which the next image cannot be displayed is a state in which the next image cannot be immediately displayed, or a state in which the image data expansion section 114 has not completed the expansion of the image data of the next image.

In this image display state (next image cannot be displayed) S5, the event process section 111 also waits for an event E5b indicating that the right button 163d has been pushed, an event E5c indicating that the data management section 112 has failed to acquire the next image, and an event e5d indicating that a predetermined period of time has passed from the activation of the timer section 116. The occurrence of the event E5b indicates that, in the image display state (next image cannot be displayed) S5, the user has instructed to display the next image. The occurrence of the event E5d indicates that a predetermined period of time set by the timer section 116 has passed from the start of display of a currently-displayed image, and a timing to display the next image has come while the slide show display apparatus 100 is still in the image display state (next image cannot be displayed) S5.

Detecting that the right button 163d which instructs to display the next image, the user operation analysis section 117 sends, to the event process section 111, an operation information notification which notifies the occurrence of an event E5b. In response to this operation information notification, the event process section 111 stops the timer section 116. After the timer section 116 is stopped, the event process section 111 performs state transition to the thumbnail list display state S8.

The user operation analysis section 117 may immediately send the operation information notification notifying the occurrence of the event E5b to the event process section 111 when it is detected that the right button 163d is pushed once. Also, the user operation analysis section 117 may send an operation information notification notifying the occurrence of the event E5b to the event process section 111, when it is detected that the right button 163d is pushed for a predetermined number of times (e.g. 3 times) within a predetermined period of time (e.g. 1 second). The user event analysis section 117 may send an operation information notification notifying the occurrence of the event E5b to the event process section 111, only after the image, which is currently displayed on the display section 140 by the display control section 115, is displayed for a predetermined period of time.

In case where there is no response from the relay server apparatus 200 until a predetermined period of time has passed from the dispatch of the next image acquisition request, the data management section 112 sends, to the event process section 111, a data acquisition failure notification which notifies that an event E5c has occurred. In response to this data acquisition failure notification, the event process section 111 judges that there is no next image to be displayed, and hence performs state transition to the image display state (no next image) S7.

After a predetermined period of time has passed from the activation, the timer section 116 sends, to the event process section 111, a timer notification which notifies that an event E5d has occurred. In the image display state (next image cannot be displayed) S5, when the event process section 111 receives the timer notification, the event process section 111 re-activates the timer section 116. In this case, the event process section 111 waits for the events E5a-E5d, without performing state transition.

Image Display State (Next Image Can Be Displayed) S6

The state S6 in which the next image can be displayed is a state of waiting for a timing to display the next image to be displayed, after preparation to immediately display the next image has been completed. At the time of state transition from the image display state (next image cannot be displayed) S5 to the image display state (next image can be displayed) S6, the image display screens 900a-900c are kept displayed without update.

In the image display state (next image can be displayed) S6, the event process section 111 waits for either an event E6a indicating that a predetermined period of time has passed from the activation of the timer section 116 or an event E6b which indicates that the right button has been pushed. The occurrence of the event E6a indicates that a predetermined period of time set by the timer section 116 has passed from the start of the display of the current image and a timing to display the next image has come. The occurrence of the event E6b indicates that the user has instructed to display the next image.

After a predetermined period of time has passed from the activation, the timer section 116 sends, to the event process section 111, a timer notification which notifies that the event E6a has occurred. Also, detecting that the right button 163d which instructs to display the next image has been pushed, the user operation analysis section 117 sends, to the event process section 111, an operation information notification which notifies that the event E6b has occurred. Receiving either the timer notification or the operation information notification, the event process section 111 performs state transition to the image display state (next image cannot be displayed) S5.

After the state transition to the image display state (next image cannot be displayed) S5, the event process section 111 instructs the display control section 115 to display the next image on the display section 140. The display control section 115 displays, on the display section 140, an image display screen for displaying the next image which has already been drawn off-screen. Subsequently, the event process section 111 instructs the data management section 112 to acquire a new next image to be displayed after the image (which was formerly regarded as a next image) currently displayed on the display section 140. The data management section 112 sends, to the relay server apparatus 200, a next image acquisition request to acquire a new next image. Furthermore, the event process section 111 re-activates the timer section 116.

Image Display State (No Next Image) S7

The image display state (no next image) S7 is a state where the data management section 112 cannot acquire, from the relay server apparatus 200, an image to be displayed next. For example, this state corresponds to a case where, while a slide show of an album having 36 images is carried out, it is attempted to acquire the 37th image.

In the image display state (no next image) S7, the event process section 111 waits for either an event E7a indicating that a predetermined period of time has passed from the activation of the timer section 116 or an event E7b indicating that the right button 163d has been pushed. The occurrence of the event E7a or E7b in the image display state (no next image) S7 indicates that, even if a next image to be displayed cannot be acquired, either a timing to display the next image has come or the user has instructed to display the next image.

Also when these events occur in the image display state (no next image) S7, the event process section 111 performs state transition to the thumbnail list display state S8.

Thumbnail List Display State S8

The thumbnail list display state S8 is a state for listing thumbnails of images included in an album. In other words, in the thumbnail list display state S8, the display control section 115 causes the display section 140 to display a thumbnail list display screen.

Fig. 11 shows a thumbnail list display screen 1000 which is displayed on the display section 140 by the display control section 115, in the thumbnail list display state S8. As shown in Fig. 11, the thumbnail list display screen 1000 includes: plural thumbnails 1001; a title display area 1002 for displaying a title of an album; and an acceptable command display area 1003 for listing commands that the user can input. Thumbnails 1001 are miniature representations of images included in an album. In the example shown in Fig. 11, 36 thumbnails 1001 of 36 images in the album are listed in the thumbnail list display screen 1000. The thumbnails 1001 displayed in the thumbnail list display screen 1000 may be all of the thumbnails of the images in the album or may be some of these thumbnails.

While the thumbnail list display screen 1000 shown in Fig. 11 is shown, the event process section 111 waits for an event notification. Events to which the event process section 111 responds in the thumbnail list display state S8 are an event E8a which indicates that one of the up, down, left, and right buttons in the direction pad section 163 has been pushed and an event E8b which indicates that the determination button 163e has been pushed.

Detecting that one of the up, down, left, and right buttons of the remote controller 160 has been pushed, the user operation analysis section 117 sends, to the event process section 111, an operation information notification which notifies that the event E8a has occurred. This operation information notification includes information indicating which one of the up, down, left, and right buttons has been pushed. In response to this operation information notification, the event process section 111 updates thumbnail selection state information indicating which thumbnail has been selected among the listed thumbnails, in accordance with the type of the button which has been pushed. Also, the event process section 111 instructs the display control section 115 to update the display screen. In response to this instruction, the display control section 115 highlights the currently-selected thumbnail in the thumbnail list display screen 100, in accordance with the thumbnail selection state information.

Detecting that the determination button 163e of the remote controller 160 has been pushed, the user operation analysis section 117 sends, to the event process section 111, an operation information notification which notifies that the event E8b has occurred. In response to this operation information notification, the event process section 111 performs state transition to the aforesaid title slide display (top image cannot be displayed) S3. Also, the event process section 111 determines which image has been selected at the time of the occurrence of the event E8b, in reference to the thumbnail selection state information, and instructs the data management section 112 to acquire the selected image. The data management section 112 sends, to the relay server apparatus 200, a selected image acquisition requirement to acquire the selected image.

Error State S9

Transition to the error state S9 occurs when an error occurs in the course of the aforesaid processes. In the error state S9, the display control section 115 displays one of error display screens 1100a-1100c shown in Fig. 12.

Fig. 12 shows examples of an error display screen that the display control section 115 displays on the display section 140 at the time of occurrence of an error. An error display screen 1100a shown in (a) of Fig. 12 is an example of an error display screen which is displayed when the relay server apparatus 200 does not respond to the aforesaid meta-information acquisition requirement, for a predetermined period of time. An error display screen 1100b shown in (b) of Fig. 12 shows an example of an error display screen which is displayed when an album having a user-specified album ID is not under the management of the relay server apparatus 200. An error display screen 1100c shown in (c) of Fig. 12 shows an example of an error display screen which is displayed when image data acquired in response to the aforesaid top image acquisition requirement is erroneous.

As shown in Fig. 12, each of the error display screens 1100a-1100c includes an error information display area 1101 including a character string indicating a type of an error which has occurred, and an acceptable command display area 1102 for listing commands that the user can input. The acceptable command display area 1102 informs that the user may push the determination button 163e to acknowledge the error information

While one of the error display screens 1100a-1100c shown in Fig. 12 is displayed, the event process section 111 waits for occurrence of an event E9a indicating that the determination button 163e has been pushed.

Detecting that the determination button 163e of the remote controller 160 has been pushed, the user operation analysis section 117 sends, to the event process section 111, an operation information notification which notifies that the event E9a has occurred. In response to this operation information notification, the event process section 111 performs state transition to the album ID specifying state S 1 which is the initial state.

A state transition table which is referred to by the event process section 111 in order to realize the processes above is shown below. In the state transition table, respective rows correspond to the aforesaid 9 states, whereas respective columns correspond to the events to which the event process section 111 responds. Each cell is further divided into three rows. The first row corresponds to a process before transition, the second row corresponds to a state to which transition is carried out, and the third row indicates a process after transition. Each blank in the table indicates that there is no process to be executed or no state to which transition is carried out.

[Table 1]

| | Numerical button is pushed | Determination button is pushed | Up, down, left, or right button is pushed | Succeeding in acquiring data | Failing to acquire data | Timer |
|---|---|---|---|---|---|---|
| S1: Album ID Specifying state | Update album ID | | Update album selection state information | | | |
| | | Transition to S2 | | | | |
| | | Album information acquisition request | | | | |

(continued)

| | Numerical button is pushed | Determination button is pushed | Up, down, left, or right button is pushed | Succeeding in acquiring data | Failing to acquire data | Timer |
|---|---|---|---|---|---|---|
| S2: Meta-information acquiring state | | | | Update script | | |
| | | | | Transition to S3 | Transition to S9 | |
| | | | | Top image acquisition request | | |
| S3: Title slide display state (top image cannot be displayed) | | | | Generate top image display screen | | |
| | | | | Transition to S4 | Transition to S9 | |
| | | | | Update display screen | | |
| S4: Title slide display state (top image can be displayed) | | | | | | |
| | | Transition to S5 | | | | |
| | | Display image Next image acquisition request Activate timer section | | | | |
| S5: Image display state (next image cannot be displayed) | | | Stop timer section | Generate next image display screen | | Re-activate timer section |
| | | | Transition to S8 | Transition to S6 | Transition to S7 | |
| | | | | Update display screen | | |
| S6: Image display state (next image can be displayed) | | | | | | |
| | | | Transition to S5 | | | Transition to S5 |
| | | | Display image Next image acquisition requirement Activate timer section | | | Display image Next image acquisition requirement Activate timer section |
| S7: Image display state (no next image) | | | | | | |
| | | | Transition to S2 | | | Transition to S2 |
| | | | | | | |

(continued)

| | Numerical button is pushed | Determination button is pushed | Up, down, left, or right button is pushed | Succeeding in acquiring data | Failing to acquire data | Timer |
|---|---|---|---|---|---|---|
| S8: Thumbnail list display state | | | Update thumbnail selection state information | | | |
| | | Transition to S3 | | | | |
| | | Selected image acquisition request | | | | |
| S9: Error state | | | | | | |
| | | Transition to S1 | | | | |
| | | | | | | |

As discussed above, the control section 110 realizes slide show display with reference to the state transition table. The control section 110 serially displays images in an album, while alternating the image display state (next image cannot be displayed) S5 and the image display state (next image can be displayed) S6. In doing so, the control section 110 displays an image on the display section 140 during an image display period which has been set by the timer section 116 in advance, and then displays the next image on the display section 140 when the time runs out. As such, plural images in an album are serially displayed one-by-one on the display section 140, at time intervals set by the timer section 116.

The control section 110 is characterized in that, until it becomes possible to display a top image, i.e. until it becomes possible to start reproduction of a slide show, the control section 110 displays, as a title slide, meta-information in regard to the slide show to be reproduced. This allows the user to view the meta-information in regard to the slide show until it becomes possible to start reproduction of the slide show, when a delay occurs in acquisition of slide show data for displaying the top image

(A process to acquire meta-information and slide show data).

The slide show display apparatus 100 is characterized by acquiring meta-information included in slide show data, independently of the slide show data. In this connection, the following will give details of the process to acquire meta-information and slide show data from the relay server apparatus 200, with reference to Figs. 13-16.

Fig. 13 is a sequence diagram showing an example of data exchange between the slide show display apparatus 100 and the relay server apparatus 200.

As show in Fig. 13, receiving a slide show reproduction start instruction, the control section 110 of the slide show display apparatus 100 sends a title slide display data acquisition request P101 to the communications section 120, in order to acquire sets of title slide display data Q 101 a and Q101b. In response to the request, the communications section 120 sends the title slide display data acquisition request P101 to the relay server apparatus 200, based on the HTTP POST method. The HTTP POST method request includes, as a terminal parameter P101a, attributes of the slide show display apparatus 100.

Fig. 14 shows an example of the HTTP POST method request. In the HTTP POST method request shown in Fig. 14, the last line "user=username&pw= 1234567890123456" is the terminal parameter P101a.

Receiving the title slide display data acquisition request P101, the relay server apparatus 200 refers to the terminal parameter P101a and sends, to the slide show display apparatus 100, meta-information Q 101 a which is to be displayed in the title slide and a process definition script Q 101 b which defines a process which is executed while the title slide is displayed.

The relay server 200 may be arranged so as to send, to the slide show display apparatus 100, meta-information Q101a which has been extracted from the slide show data and stored in advance. Alternatively, the relay server apparatus 200 may be arranged so as to extract meta-information Q 101 a from the slide show data and send the extracted meta-information Q101a to the slide show display apparatus 100, when the title slide display data acquisition request P101a is supplied.

The control section 110 which has acquired the meta-information Q101a via the communications section 120 reads out a title slide display screen generating script R101 from the storage section 140, and updates this title slide display screen generating script R101 with reference to the meta-information Q101a. Thereafter, the control section 110 generates a title slide display screen 1101 based on the updated title slide display screen generating script R101, and outputs the generated title slide display screen I101 to the display section 140.

Subsequently, to acquire, among the slide show data, sets of first image display data Q102a-Q102c used for displaying the first image in the slide show, the control section 110 sends, as an HTTP POST method request, a first image display data acquisition request P102 to the relay server apparatus 200 via the communications section 120.

Receiving the first image display data acquisition request P102, the relay server apparatus 200 sends first image data Q102a, an image display screen generating script Q102b, and a process definition script Q 102c to the slide show display apparatus 100.

After acquiring the sets of first image display data Q102a-Q102c via the communications section 120, the control section 110 generates, based on the image display screen generating script Q102b, a first image display screen I102 including an image corresponding to the image data Q102a, and draws the generated first image display screen I102 off-screen in the image buffer. When the control section 110 receives either a timer notification which notifies a timing to display the first image or a next image display instruction which is input by the user and instructs to display the first image, the control section 110 causes the display section 140 to display the first image which has already been drawn off-screen.

Thereafter, the slide show display apparatus repeats a similar process for the second image and the subsequent images, so that the slide show is reproduced.

Fig. 13 illustrates a case where the slide show display apparatus 100 acquires meta-information Q101a from the relay server apparatus 200 and updates, based on the acquired meta-information Q101a, a title slide display screen generating script R101 which has been stored in the storage section 130 in advance. The meta-information acquisition process of the present invention, however, is not limited to this case.

Fig. 15 shows a variant example of the meta-information acquisition process in the slide show display apparatus 100. Fig. 15 is a sequence diagram showing another example of data exchange between the slide show display apparatus 100 and the relay server apparatus 200.

The example shown in Fig. 15 is different from the example shown in Fig. 13 in that, in response to a title slide display data acquisition request P101, the relay server apparatus 200 sends an updated title slide display screen generating script Q101c to the slide show display apparatus 100. Into the title slide display screen generating script Q101c supplied from the relay server 200 to the slide show display apparatus 100, meta-information Q101a which has been extracted from the slide show data in the relay server apparatus 200 is embedded.

To achieve the process in line with the sequence diagram shown in Fig. 15, the relay server apparatus 200 updates a title slide display screen generating script Q 101 c stored in the relay server apparatus 200, based on meta-information Q101a which has been extracted from the slide show data in advance, and sends the updated title slide display screen generating script Q101c to the slide show display apparatus 100. On the other hand, the slide show display apparatus 100 generates a title side display screen I101 with reference to the title slide display screen generating script Q101c supplied from the relay server apparatus 200, and displays the generated screen I101 on the display section 140.

Fig. 16 shows another variant example of the meta-information acquisition process in the slide show display apparatus 100, and is a sequence diagram showing a further example of data exchange between the slide show display apparatus 100 and the relay server apparatus 200.

The example shown in Fig. 16 is different from the example shown in Fig. 15 in that the slide show display apparatus 100 at once acquires slide show data used for reproducing a slide show. More specifically, the slide show display apparatus 100 requests, as a slide show data acquisition request P110, acquisition of slide show data required to reproduction a whole slide show, and in response to this, the relay server apparatus 200 at once sends, to the slide show display apparatus 100, sets of image data Q110a, image display screen generating scripts Q110b, and process definition scripts Q110c.

According to the sequence diagram shown in Fig. 16, sets of slide show data Q110a-Q110c acquired through the intermediary of the communications section 120 are temporarily stored in the storage section 130. Receiving a timer notification or a next image display instruction, the control section 110 reads out, from the storage section 140, image data (e.g. Q102a) of an image to be displayed and an image display screen generating script (e.g. Q102b) for displaying the image, generates an image display screen (e.g. I102) including the image, and displays the generated screen on the display section 140.

Any one of the above-described processes allows the slide show display apparatus 100 to acquire, independently of slide show data, meta-information included in the slide show data from the relay server apparatus 200, and display the acquired meta-information as a title slide on the display section 140, until reproduction of the slide show starts.

The arrangement in which the slide show display apparatus 100 acquires meta-information included in slide show data, independently of the process to acquire the slide show data, has been discussed above. Not limited to this arrangement, the content reproduction apparatus of the present invention may include meta-information extraction means for extracting meta-information from content data being currently acquired.

(Specific Example of Meta-Information Acquisition Process)

Now, the following will describe a specific example of a meta-information acquisition process in which the slide show display apparatus 100 acquires meta-information, with reference to Figs. 17 and 18. The following assumes that the slide show display apparatus 100 acquires, as meta-information, EXIF information stored in JPEG data in slide show data.

First, a data structure of JPEG data is briefly explained with reference to Fig. 17. Fig. 17 shows a data structure of JPEG data.

As shown in (a) of Fig. 17, JPEG data J1000 includes an SOI marker J1100, an APP1 marker J1200, an APP1 data area J1300, and an area J1400 including other markers and data areas. The SOI marker J1100 indicates a starting position of the JPEG data J1000. The APP1 marker J1200 subsequent to the SOI marker J1100 indicates a starting position of the APP1 data area J1300. The APP1 data area J1300 subsequent to the APP1 marker J1200 is a data area for storing EXIF information. The APP1 data area J1300 stores an EXIF header J1310 and EXIF information J1320.

(b) of Fig. 17 is a data structure diagram giving further details of the structures of the APP1 marker J1200 and the APP1 data area J 1300.

As illustrated in (b) of Fig. 17, at the head of the APP1 data area J1300, i.e. immediately after the APP1 marker J1200, a number indicating the data size of the APP1 data area J 1300 is stored as an APP1 data size J 130 1.

After the APP1 data size J1301, the EXIF header J 1310 is stored, and then the EXIF information J1320 is stored. Subsequently, the EXIF information J1320 is stored in accordance with the TIFF format. The RXIF information J 1320 includes a TIFF header J1321, IFD0 (main image) data J1322, and IFD1 (thumbnail) data J1323. Meta-information in regard to a main image of JPEG data J1000 is stored as IFD0 data J1322 in the APP1 data area J1300. On the other hand, the thumbnail image of the main image is stored as IFD1 data J1323 in the APP1 data area J1300.

The meta-information stored as IFD0 data J1322 includes an explanation of the main image specified by an Image Description tag and the date and time of the most recent update of the main image specified by a Date Time tag. These sets of information may be used as meta-information of slide show data.

Fig. 18 shows a specific example of a meta-information acquisition process in the slide show display apparatus 100, and is a sequence diagram showing another example of data exchange between the slide show display apparatus 100 and the relay server apparatus 200.

When the slide show data is stored in the storage section of the relay server apparatus 200, the relay server apparatus 200 detects in which area, in the JPEG data of the first image in the slide show data, the EXIF information is stored, and the relay server apparatus 200 has stored, as EXIP positional information Q201, the starting position and ending position of the EXIF information in advance.

When the user specifies an album ID, the control section 110 (more specifically, the data management section 112) of the slide show display apparatus 100 sends an EXIF positional information acquisition request P201 to the relay server apparatus 200 via the communications section 120, in order to acquire EXIF positional information Q201. In response to the EXIF positional information acquisition request P201, the relay server apparatus 200 sends, to the slide show display apparatus 100, the EXIF positional information Q201 which has been stored in advance. Receiving the EXIF positional information Q201 via the communications section 120, the slide show display apparatus 100 temporarily stores the EXIF positional information Q201 in the storage section 130.

In response to a slide show reproduction start instruction, the control section 110 (more specifically, the data management section 112) of the slide show display apparatus 100 generates an HTTP GET method request based on the EXIF positional information Q201 stored in the storage section 130. This HTTP GET request has a Range header specifying the starting position and the ending position of the EXIF information. Fig. 19 shows an example of such an HTTP GET method request.

The communications section 120 sends the EXIF information acquisition request P202 to the relay server apparatus 200, as an HTTP GET method request. Receiving this EXIF information acquisition request P202, the relay server apparatus 200 refers to the Range header in the HTTP GET request and reads out only the EXIF information Q202 from the first-image JPEG data stored in the storage section. Then the relay server apparatus 200 returns the EXIF information Q202 to the slide show display apparatus 100.

The slide show display apparatus 100, which has acquired the EXIF information Q202, generates a title slide display screen based on the acquired EXIF information Q202 and a title slide display screen generating script Q203 which has been stored in the storage section 130, and causes the display section 140 to display the title slide display screen as a title slide.

As discussed above, the control section 110 (more specifically, the data management section 112) acquires, from the relay server 200, the EXIF positional information Q201 which indicates that in which area in the slide show data the EXIF information is stored. The control section 110 can therefore acquire only the EXIF information Q202 specified by the EXIF positional information Q201, among the slide show data in the relay server 200.

(Relay Server Apparatus 200)

Lastly, the following will briefly describe the relay server apparatus 200 (content data sending apparatus) shown in Fig. 2, with reference to Figs. 20 and 21.

Fig. 20 is a functional block diagram which outlines the relay server apparatus 200.

As shown in Fig. 20, roughly speaking, the relay server apparatus 200 includes: a communications section 210 which is a communications interface for data exchange with the slide show display apparatus 100 or the storage server apparatus 300; a storage section 220 which stores various types of data acquired through the communications section 210; and a control section 230 which generates various types of data supplied to the slide show display apparatus 100 and sends such data to the slide show display apparatus 100.

(a), (b), and (c) of Fig. 21 are functional block diagrams showing examples of the control section 230.

The control section 230 shown in (a) of Fig. 21 includes a communications management section (meta-information sending means, area specifying information sending means) 231 and an EXIF positional information detection section 232.

The communications management section 231 manages images stored in the storage server apparatus 300, in units of albums. More specifically, the communications management section 231 generates album management information for each album, and stores the generated album management information in the storage section 220. The album management information includes path information which specifies where slide show data is stored, in addition to album attributes such as album ID, album title, creation date of an album, and creator of an album. Referring to this album management information, the communications management section 231 sends slide show data corresponding to each type of acquisition request to the slide show display apparatus 100.

The EXIF positional information detection section 232 is a block for specifying in which area of slide show data meta-information is stored. More specifically, the section 232 reads out, from the storage server apparatus 300, JPEG data corresponding to the first image in an album, the section 232 detects an area, in the JPEG data, where EXIF information is stored, and the section 232 stores that area in the storage section 220, as EXIF positional information. More specifically, the EXIF positional information detection section 232 specifies the starting position of the EXIF information with reference to the APP1 marker, and figures out the ending position of the EXIF information from the EXIF information starting position and the APP1 data size stored directly subsequent to the APP1 marker.

Receiving the EXIF positional information acquisition request from the slide show display apparatus 100, the communications management section 231 returns EXIF positional information, which has been stored in the storage section 220, to the slide show display apparatus 100. Also, receiving, from the slide show display apparatus 100, the HTTP GET method request including EXIF positional information as a Range header, the communications management section 231 reads out only an area specified by the EXIF positional information included in the Range header, from the JPEG data corresponding to the first image of the album stored in the storage server 300, and sends this EXIF information to the slide show display apparatus 100.

(b) of Fig. 21 shows another example of the control section 230. According to (b) of Fig. 21, the control section 230 includes a communications management section (meta-information sending means) 231 and an EXIF information extraction section (meta-information extracting means) 233.

Being similar to the arrangement shown in (a) of Fig. 21, the communications management section 231 is a block for sending, to the slide show display apparatus 100, slide show data corresponding to each type of acquisition request.

The EXIF information extraction section 233 is a block for extracting meta-information from slide show data. More specifically, the EXIF information extraction section 233 reads out, from the storage server apparatus 300, JPEG data corresponding to the first image in an album, extracts EXIF information from the JPEG data, and stores the EXIF information in the storage section 220. Receiving an EXIF information acquisition request from the slide show display apparatus 100, the communications management section 231 sends the EXIF information stored in the storage section 220 back to the slide show display apparatus 100.

(c) of Fig. 21 shows a further example of the control section 230. According to (c) of Fig. 21, the control section 230 includes a communications management section 231 (meta-information sending means), an EXIF information extraction section (meta-information extracting means) 233, and a script changing section 234.

Being similar to the arrangement shown in (a) and (b) of Fig. 21, the communications management section 231 is a block for sending, to the slide show display apparatus 100, slide show data corresponding to each type of acquisition request.

The EXIF information extraction section 233 is, being similar to the arrangement shown in (b) of Fig. 21, a block for extracting meta-information from slide show data.

The script changing section 234 is a block for changing a title slide display screen generating script which has been stored in the storage section 220 in advance, based on meta-information extracted by the EXIF information extraction section 233. More specifically, being similar to the script changing section 118 of the slide show display apparatus 100, the script changing section 234 embeds a character string acquired as meta-information into a predetermined part of a title slide display screen generating script, so as to generate a title slide display screen generating script for displaying the meta-information. The generated title slide display screen generating script is stored in the storage section 220.

Receiving the title slide display screen generating script from the slide show display apparatus 100, the communications management section 231 returns, to the slide show display apparatus 100, a title slide display screen generating script stored in the storage section 220.

(Variant Example)

It has been described that meta-information included in image data to be reproduced as a slide show is acquired and this meta-information thus acquired is displayed until reproduction of the slide show becomes ready to start. This arrangement may be easily transformed to the following arrangement: the slide show display apparatus 100 executes a display screen generating script which has been stored at the time in the apparatus, among the slide show data (i.e. reproduces second content data), so as to display information in regard to the slide show to be reproduced, until reproduction of the slide show becomes ready to start.

As an example, referring to Fig. 22, the following will describe changes from the state transition figure in Fig. 6, in case where a title slide display screen generating script, which is used for displaying a title slide display screen including a title of an album which is to be reproduced as a slide show, is executed.

(1) In the album ID specifying state S1, instead of a meta-information acquisition request, a title slide display screen generating script acquisition request which requests acquisition of a title slide display screen generating script 1501 is sent to the relay server apparatus 200. (a) of Fig. 22 shows an example of the title slide display screen generating script 1501. As shown in (a) of Fig. 22, the title slide display screen generating script 1501 may, in addition to album title information (Melody of Sunlight), include album attributes such as information of album creation date (July 1, 2006), information in regard to the number of images in the album (36), information of creator of the album (Aku Osuya), and information of comments on the album (Our cute cat...).

(2) In the meta-information acquiring state S2, instead of acquiring meta-information from the relay server apparatus 200, a title slide display screen generating script 1501 is acquired and stored in the storage section 130. Thereafter, in the title slide display state S3, a title slide display screen 1502 is generated based on the title slide display screen generating script 1501, and the title slide display screen 1502 is displayed on the display section 140. (b) of Fig. 22 shows a title slide display screen generated based on a title slide display screen generating script 1501. The title slide display screen generating script 1501 is a script which includes the above-described album attributes in advance and is supplied from the relay server apparatus 200. The slide show display apparatus 200 can therefore display a title slide display screen 1502 on the display section 140, without performing a process to embed meta-information.

As another example, the following arrangement may be adopted: until reproduction of a slide show becomes ready to start, an operation explanation slide display screen, which includes an explanation of operations that the user can perform while a slide show is reproduced, is displayed. In this case, instead of the title slide display screen generating script 1501, an operation explanation slide display screen generating script 1601 shown in (a) of Fig. 23 is acquired from the relay server apparatus 200, and an operation explanation slide display screen 1602 shown in (b) of Fig. 23 is displayed based on the operation explanation slide display screen generating script 1601.

When it is unnecessary to change the operation explanation slide display screen 1602 in accordance with an album to be reproduced as a slide show, a predetermined operation explanation slide display screen generating script 1601 may be stored in the storage section 130 and displayed. Alternatively, the following arrangement may be adopted: while a slide show is reproduced, an operation explanation slide display screen generating script 1601 acquired from the relay server apparatus 200 is stored in the storage section 130, and when a slide show of another album is reproduced afterward, this operation explanation slide display screen generating script 1601 having been stored is re-used so that an operation explanation slide display screen 1602 is displayed. In this case, if the storage section 130 is a non-volatile storage device, the operation explanation slide display screen generating script 1601 can be reused even after the slide show display apparatus 100 is turned off and then turned on.

It is noted that details of methods of processing the scripts recited in the embodiment are given in, for example, Japanese Patent Application Publication, Tokukai, No. 2004-343683 A.

(Additional Notes)

The present invention is not limited to the description of the embodiments above, but may be altered by a skilled person within the scope of the claims. An embodiment based on a proper combination of technical means disclosed in different embodiments is encompassed in the technical scope of the present invention.

For example, the embodiment above assumes that slide show data (content data) is acquired from outside via a network and displayed. Alternatively, the present invention can be adopted to a content reproduction apparatus which reads out slide show data from the same content reproduction apparatus (more specifically, slide show data is stored in a storage space such as a hard disc drive) and reproduces the slide show data. In this case, until the entirety of the slide show data is read out and reproduction of the same becomes ready to start, meta-information included in image data to be reproduced as the slide show may be read out first and displayed, or a title slide display screen generating script or an operation explanation slide display screen generating script may be read out first and displayed.

Lastly, the blocks in the control section 110 of the slide show display apparatus 100 may be realized by hardware logic. Alternatively, the blocks may be realized by software, with the use of a CPU as follows.

That is, the slide show display apparatus 100 may include members such as: a CPU (Central Processing Unit) that executes instructions of a control program realizing the functions; a ROM (Read Only Memory) recording the program; a RAM (Random Access Memory) on which the program is executed; and a storage device (storage medium) such as a memory, which stores the program and various kinds of data. The objective of the present invention can be achieved in the following manner: program code (e.g. an executable code program, intermediate code program, and source program) of the control program of the slide show display apparatus 100, the control program being software for realizing the functions, is recorded on a storage medium in a computer-readable manner, this storage medium is supplied to the slide show display apparatus 100, and the computer (or CPU or MPU) reads out the program code from the storage medium and execute the program.

Examples of such a storage medium include a tape, such as a magnetic tape and a cassette tape; a magnetic disk, such as a flexible disk and a hard disk; a disc including an optical disc, such as a CD-ROM/MO/MD/DVD/CD-R; a card, such as an IC card (inclusive of a memory card); and a semiconductor memory, such as a mask ROM, an EPROM (Erasable Programmable Read Only Memory), an EEPROM (Electrically Erasable Programmable Read Only Memory), or a flash ROM.

Alternatively, the slide show display apparatus 100 may be capable of being connected to a communications network, allowing the program code to be supplied via the communications network. Non-limiting examples of the communications network include the Internet, intranet, extranet, LAN, ISDN, VAN CATV network, virtual private network, telephone network, mobile communications network, and satellite communications network. Non-limiting examples of the transmission media composing the communications network are, wired media such as IEEE1394, USB, power line communication, cable TV lines, telephone lines, and ADSL lines, infrared light such as IrDA and remote controller, electric waves such as Bluetooth®, IEEE802.11, HDR, mobile telephone network, satellite connection, and terrestrial digital broadcasting network. It is also noted the present invention may be realized by a carrier wave or as data signal sequence, which are realized by electronic transmission of the program code.

The blocks in the control section 230 of the relay server apparatus 200 may also be realized by hardware logic. Alternatively, being similar to the case of the slide show display apparatus 100 above, the blocks may be realized by software, with the use of a CPU.

As discussed above, a content reproduction apparatus of the present invention, which serially reproduces contents based on sets of content data belonging to a content data group and serially displays, on a display section, the contents thus reproduced, includes content reproduction means for reproducing a content based on a second set of content data which belongs to the content data group, which has been stored in the content reproduction apparatus, and which is used for displaying, on the display section, information in regard to the content data group, the content reproduction means reproducing the content based on the second set of content data until reproduction of a content based on a first set of content data belonging to the content data group becomes ready to start.

As discussed above, a content reproduction method of the present invention, for serially reproducing, by a content reproduction apparatus, contents based on sets of content data belonging to a content data group, includes the step of reproducing a content based on a second set of content data which belongs to the content data group, which has been stored in the content reproduction apparatus, and which is used for displaying, on a display section, information in regard to the content data group, the content being reproduced based on the second set of content data until reproduction of a content based on a first set of content data belonging to the content data group becomes ready to start.

As discussed above, a content reproduction system of the present invention includes: a content data sending apparatus which sends a content data group; and a content reproduction apparatus which serially reproduces contents based on sets of content data belonging to the content data group supplied from the content data sending apparatus and serially displays, on a display section, the contents thus reproduced, the content reproduction apparatus including content reproduction means for reproducing a content based on a second set of content data which belongs to the content data group, which has been stored in the content reproduction apparatus, and which is used for displaying, on the display section, information in regard to the content data group, the content reproduction means reproducing the content based on the second set of content data until reproduction of a content based on a first set of content data belonging to the content data group becomes ready to start.

According to this arrangement, in the content reproduction apparatus, the second set of content data which has been stored in the apparatus is reproduced among sets of content data belonging to the content data group, until it becomes possible to start reproduction of the first set of content data. This makes it possible to solve a problem that the user is forced to wait when the start of the reproduction of the first set of content data is delayed.

Moreover, in the content reproduction apparatus, the second set of content data which is reproduced in place of the first set of content data is content data for displaying, on the display section, information in regard to the content data group. Therefore, according to the arrangement above, information in regard to the content data group in which the first set of content data is included can be shown to the user, when the start of reproduction of the first set of content data is delayed.

As discussed above, a content data sending apparatus of the present invention, which sends a content data group to a content reproduction apparatus, includes content data sending means for sending content data for displaying information in regard to the content data group, prior to another type of content data.

As discussed above, a content data sending method of the present invention, for sending a content data group to a content reproduction apparatus, includes the step of sending content data for displaying information in regard to the content data group, prior to another type of content data in the content data group.

On this account, it is possible to complete the acquisition of the content data for displaying information in regard to the content data group. Therefore, the content reproduction apparatus can reproduce content data which has been acquired and display information in regard to the content data group, before the acquisition of the other types of content data is completed and reproduction of the other types of content data becomes ready to start. In other words, according to the arrangement above, in the content reproduction apparatus, information in regard to the content data group can be displayed until it becomes ready to start the reproduction of the other types of content data.

As discussed above, a content reproduction apparatus of the present invention, which reproduces a content based on content data so as to display, on a display section, the content thus reproduced, includes display control means for displaying, on the display section, a display screen including meta-information in regard to the content data, until reproduction of the content based on the content data becomes ready to start.

To achieve the objective above, a content reproduction method, for reproducing a content based on content data and displaying, on a display section, the content data thus reproduced, includes the step of displaying, on the display section, a display screen including meta-information in regard to the content data, until reproduction of the content based on the content data becomes ready to start.

As discussed above, a content reproduction system of the present invention includes: a content data sending apparatus which sends a content data group; and a content reproduction apparatus which serially reproduces contents based on content data belonging to the content data group supplied from the content data sending apparatus and serially displays, on a display section, the contents thus reproduced, the content reproduction apparatus including display control means for displaying, on the display section, a display screen including meta-information in regard to the content data, until reproduction of the contents based on the content data becomes ready to start.

According to this arrangement, until it becomes possible to start the reproduction of the content, meta-information is displayed on the display section in place of the content to be reproduced. This makes it possible to solve a problem that the user is forced to wait when the start of the reproduction of the content is delayed, and stress of the user is reduced.

Furthermore, according to the arrangement above, what is displayed in place of the content is meta-information in regard to the content. It is therefore possible to show, to the user, meta-information corresponding to the content to be reproduced, prior to the start of the reproduction of the content.

As discussed above, a content data sending apparatus of the present invention, which sends content data to a content reproduction apparatus, includes meta-information sending means for sending, to the content reproduction apparatus, meta-information which is included in and in regard to the content data, the meta-information being sent independently of the content data.

As discussed above, a content data sending method, for sending content data to a content reproduction apparatus, includes the step of sending, to the content reproduction apparatus, meta-information which is included in the content data and in regard to the content data, the meta-information being sent independently of the content data.

In the content reproduction apparatus on the terminal side, the acquisition of the meta-information is completed before the completion of the acquisition of the content data. Therefore, in the content reproduction apparatus on the terminal side, it is possible to display the meta-information in place of the reproduction of the content, after the completion of the acquisition of the meta-information and before the completion of the acquisition of the content data.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

Industrial Applicability

The present invention can be used for an image display apparatus for serially displaying plural images. In particular, the present invention can be suitably used for an image display apparatus which acquires an image from outside and displays the same.

**Claims**

1. A content reproduction apparatus which serially reproduces contents based on sets of content data belonging to a content data group and serially displays, on a display section, the contents thus reproduced,
   the content reproduction apparatus comprising content reproduction means for reproducing a content based on a second set of content data which belongs to the content data group, which has been stored in the content reproduction apparatus, and which is used for displaying, on the display section, information in regard to the content data group,
   the content reproduction means reproducing the content based on the second set of content data until reproduction of a content based on a first set of content data belonging to the content data group becomes ready to start.

2. The content reproduction apparatus as defined in claim 1,
   the content reproduction apparatus acquiring the content data group from outside and performing serial reproduction of the contents based on the acquired content data group,
   the content reproduction apparatus further comprising content data acquisition means for acquiring the second set of content data from outside, prior to the first set of content data.

3. The content reproduction apparatus defined in claim 1 or claim 2, further comprising reproduction preparation time estimation means for estimating a reproduction preparation time required until the reproduction of the content based on the first set of content data becomes ready to start,
   the content reproduction means reproducing the content based on the second set of content data until reproduction of the content based on the first set of content data becomes ready to start, when the reproduction preparation time is not shorter than a predetermined threshold.

4. The content reproduction apparatus as defined in any one of claims 1 to 3,
   wherein, the second set of content data is content data for displaying, on the display section, a display screen including a title of the content data group.

5. The content reproduction apparatus as defined in any one of claims 1 to 3,
   wherein, the second set of content data is content data for displaying, on the display section, a display screen including an explanation of operations that the user can execute while the content data group is reproduced.

6. A content reproduction apparatus which reproduces a content based on content data so as to display, on a display section, the content thus reproduced,
   the content reproduction apparatus comprising display control means for displaying, on the display section, a display screen including meta-information in regard to the content data, until reproduction of the content becomes ready to start.

7. The content reproduction apparatus as defined in claim 6,
   the content reproduction apparatus acquiring the content data from outside and reproducing the content based on the content data,
   the content reproduction apparatus further comprising meta-information acquisition means for acquiring the meta-information included in the external content data, independently of a process to acquire the content data.

8. The content reproduction apparatus as defined in claim 7, further comprising area specifying information acquisition means for acquiring, from outside, area specifying information which specifies in which area of the content data the meta-information is stored,

the meta-information acquisition means acquiring the meta-information in such a manner that only the area specified by the area specifying information is acquired among the external content data.

9. The content reproduction apparatus as defined in claim 6,

the content reproduction apparatus acquiring the content data from outside and reproducing the content based on the content data,

the content reproduction apparatus further comprising meta-information extraction means for extracting the meta-information from the content data being acquired.

10. The content reproduction apparatus as defined in any one of claims 6 to 9, further comprising reproduction preparation time estimation means for estimating a reproduction preparation time required until the reproduction of the content becomes ready to start,

if the reproduction preparation time is not shorter than a predetermined threshold, the display control section causing the display section to display a display screen including the meta-information until the reproduction of the content becomes ready to start.

11. A content data sending apparatus which sends a content data group to a content reproduction apparatus,

the content data sending apparatus comprising content data sending means for sending content data for displaying information in regard to the content data group, prior to another type of content data.

12. A content data sending apparatus which sends content data to a content reproduction apparatus,

the content data sending apparatus comprising meta-information sending means for sending, to the content reproduction apparatus, meta-information which is included in and in regard to the content data, the meta-information being sent independently of the content data.

13. The content data sending apparatus as defined in claim 12, further comprising meta-information extraction means for extracting the meta-information from the content data,

the content data sending means sending, to the content reproduction apparatus, the meta-information extracted by the meta-information extraction means.

14. The content data sending apparatus as defined in claim 12, further comprising area specifying information sending means for sending, to the content reproduction apparatus, area specifying information which specifies in which area of the content data the meta-information is stored.

15. A content reproduction system, comprising:

a content data sending apparatus which sends a content data group; and

a content reproduction apparatus which serially reproduces contents based on sets of content data belonging to the content data group supplied from the content data sending apparatus and serially displays, on a display section, the contents thus reproduced,

the content reproduction apparatus including content reproduction means for reproducing a content based on a second set of content data which belongs to the content data group, which has been stored in the content reproduction apparatus, and which is used for displaying, on the display section, information in regard to the content data group, the content reproduction means reproducing the content based on the second set of content data until reproduction of a content based on a first set of content data belonging to the content data group becomes ready to start.

16. A content reproduction system, comprising:

a content data sending apparatus which sends a content data group; and

a content reproduction apparatus which serially reproduces contents based on content data belonging to the content data group supplied from the content data sending apparatus and serially displays, on a display section, the contents thus reproduced,

the content reproduction apparatus including display control means for displaying, on the display section, a display screen including meta-information in regard to the content data, until reproduction of the contents based on the content data becomes ready to start.

**17.** A content reproduction method for serially reproducing, by a content reproduction apparatus, contents based on sets of content data belonging to a content data group,
the content reproduction method comprising the step of reproducing a content based on a second set of content data which belongs to the content data group, which has been stored in the content reproduction apparatus, and which is used for displaying, on a display section, information in regard to the content data group, the content being reproduced based on the second set of content data until reproduction of a content based on a first set of content data belonging to the content data group becomes ready to start.

**18.** A content reproduction method for reproducing a content based on content data acquired from outside and displaying, on a display section, the content data thus reproduced,
the content reproduction method comprising the step of displaying, on the display section, a display screen including meta-information in regard to the content data, until reproduction of the content based on the content data becomes ready to start.

**19.** A content data sending method for sending a content data group to a content reproduction apparatus,
the content data sending method comprising the step of sending content data for displaying information in regard to the content data group, prior to another type of content data in the content data group.

**20.** A content data sending method for sending content data to a content reproduction apparatus,
the content data sending method comprising the step of sending, to the content reproduction apparatus, meta-information which is included in the content data and in regard to the content data, the meta-information being sent independently of the content data.

**21.** A program for causing a computer to function as a content reproduction apparatus as defined in any one of claims 1 to 10,
the program causing the computer to function as each of the means included in the content reproduction apparatus.

**22.** A program for causing a computer to function as a content data sending apparatus as defined in any one of claims 11 to 14,
the program causing the computer to function as each of the means included in the content data sending apparatus.

**23.** A computer-readable storage medium, storing the program as defined in claim 21 or claim 22.

# FIG. 1

CONTROL SECTION — 110

TIMER SECTION — 116

TIMER NOTIFICATION | ACTIVATION/DEACTIVATION OF TIMER

USER OPERATION ANALYSIS SECTION — 117

IR RECEIVING SECTION

OPERATION INFORMATION NOTIFICATION

EVENT PROCESS SECTION — 111

REPRODUCTION PREPARATION TIME ESTIMATION SECTION — 119

NOTIFICATION OF SUCCESS/FAILURE OF DATA ACQUISITION

DATA ACQUISITION REQUEST

DISPLAY CONTROL SECTION — 115

DISPLAY SECTION

DISPLAY SCREEN

DISPLAY SCREEN GENERATING SECTION — 113

SCRIPT, IMAGE DATA

DATA MANAGEMENT SECTION — 112

COMMUNICATIONS SECTION

DATA ACQUISITION REQUEST

META-INFORMATION SECTION

SCRIPT

STORAGE SECTION

EXPANDED IMAGE DATA | IMAGE DATA

IMAGE DATA EXPANSION SECTION — 114

SCRIPT CHANGING SECTION — 118

EP 2 056 288 A1

32

FIG. 2

SLIDE SHOW DISPLAY SYSTEM  1

```
┌─ 100 ─────────┐
│ SLIDE SHOW    │
│ DISPLAY       │
│ APPARATUS     │
└───────────────┘

┌─ 100 ─────────┐        ┌─ 200 ──────┐        ┌─ 300 ──────┐
│ SLIDE SHOW    │  400   │ RELAY      │        │ STORAGE    │
│ DISPLAY       │◄─►  X ◄─►│ SERVER   │◄─►      │ SERVER     │
│ APPARATUS     │        │ APPARATUS  │        │ APPARATUS  │
└───────────────┘        └────────────┘        └────────────┘

┌─ 100 ─────────┐
│ SLIDE SHOW    │
│ DISPLAY       │
│ APPARATUS     │
└───────────────┘
```

FIG. 3

100

SLIDE SHOW
DISPLAY
APPARATUS

130

STORAGE
SECTION

140

DISPLAY
SECTION

110

CONTROL
SECTION

120

COMMUNICATIONS
SECTION

RELAY
SERVER

160

REMOTE
CONTROLLER

150

IR
RECEIVING
SECTION

FIG. 4

100

140

150

160

161

162

163a
163c
163b

163d
163e

163

# FIG. 5

```
                    ┌─────────────┐
                    │    START    │
                    └──────┬──────┘
                           │          ╭S101
       ┌───────────────────┴───────────────────┐
       │   START ACQUISITION OF META-INFORMATION │
       └───────────────────┬───────────────────┘
                           │          ╭S102
       ┌───────────────────┴───────────────────┐
       │   START ACQUISITION OF SLIDE SHOW DATA  │
       └───────────────────┬───────────────────┘
                           │
                           ▼          ╭S103
                        ╱──────╲                    NO
                   ╱─────────────────╲─────────────────┐
                  │   HAS ACQUISITION OF   │            │
                   ╲   META-INFORMATION    ╱            │
                    ╲  BEEN COMPLETED?    ╱             │
                     ╲──────┬──────╱                    │
                        YES │          ╭S104            │
       ┌───────────────────┴───────────────────┐       │
       │    START DISPLAY OF META-INFORMATION   │       │
       └───────────────────┬───────────────────┘       │
                           │                            │
                           ▼          ╭S105             │
                        ╱──────╲                    NO  │
                   ╱─────────────────╲─────────────────┐│
                  │   HAS ACQUISITION OF   │           ││
                   ╲   SLIDE SHOW DATA     ╱           ││
                    ╲  BEEN COMPLETED?    ╱            ││
                     ╲──────┬──────╱                   ││
                        YES │          ╭S106           ││
       ┌───────────────────┴───────────────────┐      ││
       │   FINISH DISPLAY OF META-INFORMATION   │      ││
       └───────────────────┬───────────────────┘      ││
                           │          ╭S107
       ┌───────────────────┴───────────────────┐
       │        REPRODUCE SLIDE SHOW            │
       └───────────────────┬───────────────────┘
                           │
                    ┌──────┴──────┐
                    │     END     │
                    └─────────────┘
```

# FIG. 6

FIG. 7

(a)

600

VIEW NEW ALBUM: PLEASE ENTER ID OF ALBUM YOU WANT TO VIEW

| 1212 | 25 | | | | |

601

602

PRESS [1]–[0] TO ENTER NUMBERS. PRESS [RED] TO DELETE ONE CHARACTER. PRESS [←] AND [→] TO MOVE CURSOR. PRESS [BLUE] TO SELECT FROM HISTORY. PRESS [ENTER] FOR EXECUTION

(b)

600'

VIEW NEW ALBUM: PLEASE ENTER ID OF ALBUM YOU WANT TO VIEW

| 1212 | 25 | | | | |

601

VIEW ALBUM YOU VIEWED PREVIOUSLY: PLEASE SELECT ALBUM YOU WANT TO VIEW

"MELODY OF SUNSHINE"   1234  5656  4545  9292

"PARADISE EXPRESS"      9797  4646  8888  0010

"ULTIMATE POSE"   4949  8989  2222  4456

603

604

602

PRESS [↓] AND [↑] FOR SELECTION. PRESS [ENTER] FOR EXECUTION

FIG. 8

700

701

PRESENTLY CHECKING
ALBUM ID

## FIG. 9

( a )

800a                              803

DOWNLOADING... 20%

IMAGE DESCRIPTION : Mt. Fuji

DATE: MARCH 2, 2006

801

802

( b )

800b

IMAGE DESCRIPTION : Mt. Fuji

DATE: MARCH 2, 2006

801

802

PRESS [DETERMINATION] FOR ACKNOWLEDGEMENT

802

( c )

```
<?xml version="1.0" encoding="UTF-8"?>
<svg id="svg" width="1920" height="1080">
        <ev:listener ev:event="load" ev:observer="#svg" ev:handler="#myHandler" />
        <handler id="myHandler" type="application/ecmascript">
        <![CDATA[
        var time; // 0:infinity

        .................................................

<g id="g1" xml:space="preserve" visibility="visible">
<animate id="hidd1" attributeName="visibility" begin="25" dur="0" fill="freeze" from="visible" to="hidden"/>
<text x="280" y="100" id="text01" font-size="126" fill="rgb(255,255,255)">Mt.Fuji</text>
<text x="280" y="280" id="text01" font-size="84" fill="rgb(255,255,255)">2006-03-02 </text>
<text x="280" y="380" id="text01" font-size="84" fill="rgb(255,255,255)">AKU OSUYA</text>
<image x="640" y="480" width="640" height="480" xlink:href="thumbnail-0.jpg" />
</g>

        .................................................

</svg>
```

# FIG. 10

(a)

900a

(b)

900b

901

(c)

900c

FIG. 11

1000            1002

Mt. Fuji       13/36

1001

1004

PRESS [←], [→], [ | ], AND [ | ] TO SELECT PHOTOGRAPHS, AND PRESS [DETERMINATION]. PRESS [BLUE] TO RUN SLIDESHOW

1003

## FIG. 12

( a )

1100a

1101

■ ERROR ■

TIMEOUT

PRESS [DETERMINATION] — 1102
FOR ACKNOWLEDGEMENT

( b )

1100b

1101

■ ERROR ■

ALBUM ID IS INVALID

PRESS [DETERMINATION] — 1102
FOR ACKNOWLEDGEMENT

( c )

1100c

1101

■ ERROR ■

CORRUPTED DATA OR DATA WITH
UNAVAILABLE FORMAT

PRESS [DETERMINATION] — 1102
FOR ACKNOWLEDGEMENT

## FIG. 13

EP 2 056 288 A1

# FIG. 14

HTTP  POST METHOD  EXAMPLE OF REQUEST

POST /cgi-bin/login.cgi HTTP/1.1 ←INDICATING POST
Accept: image/gif, image/jpeg, */*
Referer: http://slideshow.co.jp/number_12.zip
Accept-Language: ja
Content-Type: application/x-www-form-urlencoded
Accept-Encoding: gzip, deflate
User-Agent: Mozilla/4.0 (Compatible; MSIE 6.0; Windows NT 5.1;)
Host: terminal01
Content-Length: 16
Connection: Keep-Alive
Cache-Control: no-cache
(BLANK LINE)
user=username&pw=1234567890123456

# FIG. 15

| DISPLAY SECTION /140 | CONTROL SECTION /110 | COMMUNICATIONS SECTION /120 | RELAY SERVER APPARATUS /200 |

INSTRUCTION TO START SLIDE SHOW

/P101
TITLE SLIDE DISPLAY DATA ACQUISITION REQUEST

HTTP POST METHOD /P101a
· SENDING TERMINAL PARAMETER /P101
· TITLE SLIDE DISPLAY DATA ACQUISITION REQUEST

UPDATE SCRIPT

· TITLE SLIDE DISPLAY SCREEN ⟋ Q101c
GENERATING SCRIPT
· PROCESS DEFINITION SCRIPT ⟋ Q101b

DISPLAY TITLE SLIDE

TITLE SLIDE DISPLAY SCREEN

· TITLE SLIDE DISPLAY SCREEN ⟋ Q101c
GENERATING SCRIPT
· PROCESS DEFINITION SCRIPT ⟋ Q101b

/P102
FIRST IMAGE DISPLAY DATA ACQUISITION REQUEST

HTTP POST METHOD /P102
· FIRST IMAGE DISPLAY DATA ACQUISITION REQUEST

⟍I101

TIMER NOTIFICATION AND INSTRUCTION TO DISPLAY NEXT IMAGE

/I102
FIRST IMAGE DISPLAY SCREEN

/Q102a
· FIRST IMAGE DATA /Q102b
· IMAGE DISPLAY SCREEN GENERATING SCRIPT
· PROCESS DEFINITION SCRIPT ⟋ Q102c

/Q102a
· FIRST IMAGE DATA /Q102b
· IMAGE DISPLAY SCREEN GENERATING SCRIPT
· PROCESS DEFINITION SCRIPT ⟋ Q102c

DISPLAY FIRST IMAGE

/P103
SECOND IMAGE DISPLAY DATA ACQUISITION REQUEST

HTTP POST METHOD /P103
· SECOND IMAGE DISPLAY DATA ACQUISITION REQUEST

TIMER NOTIFICATION AND INSTRUCTION TO DISPLAY NEXT IMAGE

/I103
SECOND IMAGE DISPLAY SCREEN

/Q103a
· SECOND IMAGE DATA /Q103b
· IMAGE DISPLAY SCREEN GENERATING SCRIPT
· PROCESS DEFINITION SCRIPT ⟋ Q103c

/Q103a
· SECOND IMAGE DATA /Q103b
· IMAGE DISPLAY SCREEN GENERATING SCRIPT
· PROCESS DEFINITION SCRIPT ⟋ Q103c

DISPLAY SECOND IMAGE

IMAGE BUFFER

EP 2 056 288 A1

FIG. 16

| DISPLAY SECTION /140 | CONTROL SECTION /110 | COMMUNICATIONS SECTION /120 | RELAY SERVER APPARATUS /200 |

INSTRUCTION TO START SLIDE SHOW

/P101
TITLE SLIDE DISPLAY DATA ACQUISITION REQUEST

UPDATE SCRIPT

HTTP POST METHOD /P101a
·SENDING TERMINAL PARAMETER /P101
·TITLE SLIDE DISPLAY DATA ACQUISITION REQUEST

·TITLE SLIDE DISPLAY SCREEN — Q103c
GENERATING SCRIPT
·PROCESS DEFINITION SCRIPT — Q103b

·TITLE SLIDE DISPLAY SCREEN — Q101c
GENERATING SCRIPT
·PROCESS DEFINITION SCRIPT — Q101b

DISPLAY TITLE SLIDE

TITLE SLIDE DISPLAY SCREEN

\I101

/P110
SLIDE SHOW DATA ACQUISITION REQUEST

HTTP POST METHOD /P110
·FIRST IMAGE DISPLAY DATA ACQUISITION REQUEST

·SETS OF IMAGE DATA /Q110a /Q110b
·IMAGE DISPLAY SCREEN GENERATING SCRIPTS
·PROCESS DEFINITION SCRIPTS — Q110c

/I102
FIRST IMAGE DISPLAY SCREEN

/Q102a
·FIRST IMAGE DATA /Q102b
·IMAGE DISPLAY SCREEN /Q102c
GENERATING SCRIPT
·PROCESS DEFINITION SCRIPT

TIMER NOTIFICATION AND INSTRUCTION TO DISPLAY NEXT IMAGE

DISPLAY FIRST IMAGE

/I103
SECOND IMAGE DISPLAY SCREEN

/Q103a
·SECOND IMAGE DATA /Q103b
·IMAGE DISPLAY SCREEN /Q103c
GENERATING SCRIPT
·PROCESS DEFINITION SCRIPT

TIMER NOTIFICATION AND INSTRUCTION TO DISPLAY NEXT IMAGE

DISPLAY SECOND IMAGE

IMAGE BUFFER

STORAGE SECTION

46

# FIG. 17

( a )

J1000

| JPEG DATA | | SOI MARKER | J1100 |
| | | APP1 MARKER | J1200 |
| | APP1 DATA | EXIF HEADER | J1310 |
| | | EXIF DATA (TIFF FORMAT) | J1320 |
| | | OTHER MARKER DATA | J1400 |

J1300

( b )

| FFE1 | | APP1 MARKER | | | J1200 |
| SSSS | | APP1 DATA SIZE | | | J1301 |
| 45786966 0000 | | EXIF HEADER | | | J1310 |
| 49492A00 08000000 | | TIFF HEADER | | | J1321 |
| XXXX.... | | IFD0 (MAIN IMAGE) | DIRECTORY | | |
| LLLLLLLL | | | LINK TO FID1 | | |
| XXXX.... | | IFD0 DATA AREA | | | |
| XXXX.... | | | Exif SubIFD | DIRECTORY | |
| 0 | | | | END OF LINK | |
| XXXX.... | APP1 DATA | | Exif SubIFD DATA AREA | | J1322 |
| XXXX.... | | | | INTEROPERABILITY IFD | DIRECTORY |
| 0 | | | | | END OF LINK |
| XXXX.... | | | | INTEROPERABILITY IF DATA AREA | |
| XXXX.... | | | | MAKE NOTE IFD | DIRECTORY |
| 0 | | | | | END OF LINK |
| XXXX.... | | | MAKE NOTE IFD DATA AREA | | |
| XXXX.... | | IFD1 (THUMBNAIL IMAGE) | IFD1 (THUMBNAIL IMAGE) | | |
| 0 | | | END OF LINK | | J1323 |
| XXXX.... | | IFD1 DATA AREA | | | |
| FFD8XXXX... XXXXFFD9 | | THUMBNAIL IMAGE | | | |

J1320

J1300

FIG. 18

CONTROL SECTION 110

COMMUNICATIONS SECTION 120

COMMUNICATIONS SECTION 200

STORAGE SECTION

STORE SLIDE SHOW DATA

ESTABLISH ALBUM ID

P201
EXIF POSITIONAL INFORMATION ACQUISITION REQUEST

HTTP GET METHOD    P201
· EXIF POSITIONAL INFORMATION ACQUISITION REQUEST

DETECT EXIF POSITIONAL INFORMATION

P201
EXIF POSITIONAL INFORMATION ACQUISITION REQUEST

Q201
EXIF POSITIONAL INFORMATION

Q201
NOTIFY EXIF POSITIONAL INFORMATION

EXIF POSITIONAL INFORMATION

Q201

START SLIDE SHOW

Q201
EXIF POSITIONAL INFORMATION

HTTP GET METHOD USE RANGE HEADER    P202
·EXIF POSITIONAL INFORMATION ACQUISITION REQUEST

SPECIFY RANGE OF SLIDE SHOW DATA AND MAKE REQUEST

EXIF INFORMATION ACQUISITION REQUEST

P202    Q202
EXIF INFORMATION

HTTP GET METHOD GENERATE REQUEST

Q202
EXIF INFORMATION

EXIF INFORMATION

Q202

UPDATE SCRIPT

TITLE SLIDE    Q203
DISPLAY SCREEN GENERATING SCRIPT

130
STORAGE SECTION

DISPLAY TITLE SLIDE

EP 2 056 288 A1

48

# FIG. 19

HTTP GET METHOD EXAMPLE OF REQUEST
GET / HTTP/1.1
Accept: image/gif, image/jpeg, */*
Referer: http://slideshow.co.jp/number_12.jpg
Accept-Language: ja
Accept-Encoding: gzip, deflate
User-Agent: Mozilla/4.0 (Compatible; MSIE 6.0; Windows NT 5.1;)
Host: terminal01
Range: bytes=1024-11416 ←SPECIFY ONLY STORAGE SECTION OF EXIF INFORMATION IN JPEG
(BLANK LINE)
(HEREINAFTER, BODY SECTION)

# FIG. 20

FIG. 21

(a)

230

CONTROL SECTION

232

EXIF POSITIONAL
INFORMATION
DETECTION SECTION

231

COMMUNICATIONS
MANAGEMENT
SECTION

COMMUNICATIONS
SECTION

STORAGE
SECTION

(b)

230

CONTROL SECTION

233

EXIF INFORMATION
EXTRACTION
SECTION

231

SCRIPT
CHANGING
SECTION

COMMUNICATIONS
SECTION

STORAGE
SECTION

(c)

230

CONTROL SECTION

234

SCRIPT
CHANGING
SECTION

STORAGE
SECTION

233

EXIF INFORMATION
EXTRACTION
SECTION

231

COMMUNICATIONS
MANAGEMENT
SECTION

COMMUNICATIONS
SECTION

STORAGE
SECTION

# FIG. 22

(a)

1501

```
<?xml version="1.0" encoding="UTF-8">
<svg id="svg" widt="1920" height="1080">
            <ev:listener ev:event="load" ev:observer="#svg" ev:handler="#myHnadler" />
            <handler id="myHnadler" type="application/ecmascript">
            <!<CDATA[
            var time; // 0:infinity

    ... ... ... ... ... ... ... ... ... ...

<text x="280" y="300" id="text01" font-size="126" fill="rgb(255,255,255)">MELODY OF
SUNSHINE</text>
<text x="280" y="500" id="text01" font-size="84" fill="rgb(255,255,255)">2006-07-01  36枚</text>
<text x="280" y="650" id="text01" font-size="84" fill="rgb(255,255,255)">AKU OSUYA</text>
<text x="70" y="900" id="text01" font-size="84" fill="rgb(255,255,255)">I HOPE YOU WOULD
LIKE TO SEE PHOTOS OF MY CUTE CAT</text>

    ... ... ... ... ... ... ... ... ... ...

</svg>
```

(b)

1502

# MELODY OF SUNSHINE

*2006/07/01  36 photos*

*AKU OSUYA*

I HOPE YOU WOULD LIKE TO SEE PHOTOS OF MY CUTE CAT.

# FIG. 23

( a )

1601

```
<?xml version="1.0" encoding="UTF-8">
<svg id="svg" widt="1920" height="1080">
            <ev:listener ev:event="load" ev:observer="#svg" ev:handler="#myHnadler" />
            <handler id="myHnadler" type="application/ecmascript">
            <!<CDATA[
            var time; // 0:infinity


    ... ... ... ... ... ... ... ... ...

<text x="200" y="150" id="text01" font-size="84" fill="rgb(255,255,255)">
SLIDESHOW IS STARTED.</text>
<text x="200" y="150" id="text01" font-size=" 84" fill="rgb(255,255,255)">
PRESS [DETERMINATION] TO SUSPEND SLIDESHOW, AND PRESS [DETERMINATION]
AGAIN TO RESUME SLIDESHOW.</text>
<text x="200" y="250" id="text01" font-size=" 84" fill="rgb(255,255,255)">
PRESS [←] AND [→] KEYS TO CHANGE PHOTOGRAPHS.</text>
<text x="200" y="350" id="text01" font-size=" 84" fill="rgb(255,255,255)">
PRESS [BLUE] TO DISPLAY PHOTOGRAPHS IN LIST VIEW.</text>
<text x="200" y="450" id="text01" font-size=" 84" fill="rgb(255,255,255)">
FOR ROTATION, SCALING-UP, INTERVAL CHANGE OF SLIDESHOW, AND OTHER
OPERATIONS, </text>
<text x="200" y="550" id="text01" font-size=" 84" fill="rgb(255,255,255)">
PRESS [YELLOW] BUTTON TO SELECT MENU OPTION.</text>


    ... ... ... ... ... ... ... ... ...

</svg>
```

( b )

1602

```
SLIDESHOW IS STARTED.
PRESS [DETERMINATION] TO SUSPEND SLIDESHOW, AND PRESS
[DETERMINATION] AGAIN TO RESUME SLIDESHOW.
PRESS [←] AND [→] KEYS TO CHANGE PHOTOGRAPHS.
PRESS [BLUE] TO DISPLAY PHOTOGRAPHS IN LIST VIEW.

FOR ROTATION, SCALING-UP, INTERVAL CHANGE OF SLIDESHOW,
AND OTHER OPERATIONS, PRESS [YELLOW] BUTTON TO SELECT
MENU OPTION.
```

PRESS [DETERMINATION]
FOR ACKNOWLEDGEMENT

## INTERNATIONAL SEARCH REPORT

| | International application No. |
|---|---|
| | PCT/JP2007/062940 |

A. CLASSIFICATION OF SUBJECT MATTER
*G09G5/00*(2006.01)i, *H04N5/76*(2006.01)i, *H04N5/765*(2006.01)i, *H04N5/91*
(2006.01)i, *H04N5/93*(2006.01)i, *H04N7/173*(2006.01)i

According to International Patent Classification (IPC) or to both national classification and IPC

B. FIELDS SEARCHED

Minimum documentation searched (classification system followed by classification symbols)
G09G5/00, H04N5/76, H04N5/765, H04N5/91, H04N5/93, H04N7/173

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 10-3160 A (Fuji Photo Film Co., Ltd.),<br>06 January, 1998 (06.01.98),<br>Par. Nos. [0008], [0054], [0055]; Fig. 5<br>& US 6191811 B1 & CN 1168480 A | 1,4,17,21,23<br>2,3,6,7,<br>9-13,15,16,<br>18-20,22 |
| Y | JP 2005-56030 A (Fuji Photo Film Co., Ltd.),<br>03 March, 2005 (03.03.05),<br>Par. Nos. [0041], [0042]<br>(Family: none) | 2,6,7,9,<br>11-13,15,16,<br>18-20,22 |
| Y | JP 2001-243185 A (Sony Corp.),<br>07 September, 2001 (07.09.01),<br>Claim 1<br>(Family: none) | 3,10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 September, 2007 (21.09.07) | Date of mailing of the international search report<br>02 October, 2007 (02.10.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/062940 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,X | JP 2006-304156 A  (Mitsubishi Electric Corp.), 02 November, 2006 (02.11.06), Par. Nos. [0014], [0073] to [0075] (Family: none) | 1,4,6,15-18, 21,23 |
| A | WO 2006/043427 A1  (Konica Minolta Photo Imaging Kabushiki Kaish), 27 April, 2006 (27.04.06), Par. No. [0031]; Figs. 5, 6 & JP 2006-119925 A | 1-23 |
| A | JP 2006-14012 A  (Orion Electric Co., Ltd.), 12 January, 2006 (12.01.06), Par. Nos. [0038] to [0040]; Fig. 2 & US 2005/0286874 A1    & EP 1613077 A1 | 1-23 |
| A | JP 2002-320153 A  (Matsushita Electric Industrial Co., Ltd.), 31 October, 2002 (31.10.02), Full text; all drawings (Family: none) | 1-23 |

Form PCT/ISA/210 (continuation of second sheet) (April 2005)

EP 2 056 288 A1

**INTERNATIONAL SEARCH REPORT**

International application No.

PCT/JP2007/062940

---

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III      Observations where unity of invention is lacking (Continuation of item 3 of first sheet)**

This International Searching Authority found multiple inventions in this international application, as follows:
   A matter common to the inventions in claims 1-10, 15-18, 21 and 23 is described in claim 1. Since a result of the search, however, shows that the matter is disclosed in the following document, it has become clear that the matter is not novel.
   Document 1: JP 10-3160 A (Fuji Photo Film Co., Ltd.), 06 January, 1998 (06.01.98), paragraphs [0008], [0054] and [0055], Fig. 5.
   As a result, the matter described in claim 1 does not make any contribution to the prior art, this common matter (matter described in claim 1) is not a special technical feature in the meaning of PCT Rule 13.2, Second Sentence.
   (Continued on the extra sheet.)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2007/062940 |

Continuation of Box No.III of continuation of first sheet(2)

Further, a matter common to the inventions in claims 6-10 is described in claim 6. Since it is well known in the technical field of "image display" to include information on image data in the image data as meta information, those skilled in the art can easily make frame images include information indicative of all the frame titles as meta-information in the invention described in document 1. As a result the matter described in claim 6 does not make any contribution to the prior art, this common matter (matter described in claim 6) is not a special technical feature in the meaning of PCT Rule 13.2, Second Sentence.

Further, there is no common matter between the invention in claim 1 and those in claims 11-14, 19, 20 and 22.

Thus, there is no matter common to all the inventions in claims 1-23. Therefore, since there is no other common matter deemed to be a special technical feature in the meaning of PCT Rule 13.2, Second Sentence, no technical relationship can be found among those different inventions in the meaning of PCT Rule 13.

As mentioned above, the inventions in claims 1-23 do not comply with the requirements of unity of invention.

In addition to the above-identified common matter, those described in claims 4, 6, 7, 9, 11-13 and 15-23 do not make any contribution to the prior art, either.

In summary, the number of inventions that are first described in the claims, have common matters of special technical features and define single general inventive concepts as groups of the inventions is four as follows:

Claims 1, 2, 4, 6, 7, 9,11-13 and 15-23
Claims 3 and 10
Claim 5
Claims 8 and 14

Form PCT/ISA/210 (extra sheet) (April 2005)

**EP 2 056 288 A1**

**Patent documents cited in the description**

- JP 10254966 A
- JP 2004343683 A